(19) Europäisches Patentamt
European Patent Office
Office européen des brevets

(11) Veröffentlichungsnummer : **0 575 291 A2**

(12) # EUROPÄISCHE PATENTANMELDUNG

(21) Anmeldenummer : **93810411.4**

(22) Anmeldetag : **08.06.93**

(51) Int. Cl.[5] : **C08G 61/12,** H01B 1/12

(30) Priorität : **17.06.92 CH 1906/92**

(43) Veröffentlichungstag der Anmeldung :
**22.12.93 Patentblatt 93/51**

(84) Benannte Vertragsstaaten :
**AT BE CH DE DK ES FR GB IE IT LI NL PT SE**

(71) Anmelder : **CIBA-GEIGY AG**
**Klybeckstrasse 141**
**CH-4002 Basel (CH)**

(72) Erfinder : **Vogel, Thomas, Dr.**
**Marchstrasse 5**
**W-7800 Freiburg (DE)**
Erfinder : **Finter, Jürgen, Dr.**
**Zasiusstrasse 100**
**W-7800 Freiburg (DE)**
Erfinder : **Bleier, Hartmut, Dr.**
**Dorfstrasse 16**
**W-7800 Freiburg (DE)**
Erfinder : **Bujard, Patrice, Dr.**
**Grande-Fin**
**CH-1784 Courtepin (CH)**

(54) **Elektrisch leitende Kunststoffzusammensetzungen und deren Verwendung.**

(57) Zusammensetzung aus
a) mindestens einem Polythiophen in oxidierter, polykationischer Form und wiederkehrenden Struktureinheiten der Formel I

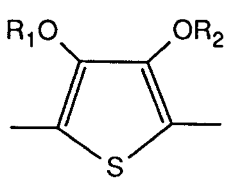

(I),

worin $R_1$ und $R_2$ unabhängig voneinander für lineares oder verzweigtes $C_1$-$C_{18}$-Alkyl oder $C_2$-$C_{18}$-Alkoxyalkyl stehen ; oder $C_3$-$C_8$-Cycloalkyl, Phenyl oder Benzyl bedeuten, die unsubstituiert oder mit $C_1$-$C_6$-Alkyl, $C_1$-$C_6$-Alkoxy oder Halogen substituiert sind ; oder $R_1$ und $R_2$ zusammen lineares $C_1$-$C_6$-Alkylen darstellen, das unsubstituiert oder mit $C_1$-$C_6$-Alkyl, $C_1$-$C_6$-Alkoxy, Halogen, $C_3$-$C_8$-Cycloalkyl, Phenyl, Benzyl, $C_1$-$C_4$-Alkylphenyl, $C_1$-$C_4$-Alkoxyphenyl, Halogenphenyl, $C_1$-$C_4$-Alkylbenzyl, $C_1$-$C_4$-Alkoxybenzyl oder Halogenbenzyl substituiert ist ; und
b) mindestens einem Polyanion eines filmbildenden thermoplastischen Polymeren mit sulfatierten Alkoholgruppen

$$-\overset{|}{\underset{|}{C}}-O-SO_3^{\ominus}$$

und/oder mit sulfonatalkylierten Alkoholgruppen

$$-\overset{|}{\underset{|}{C}}-O-(C_nH_{2n})-SO_3^{\ominus}$$

in wiederkehrenden Struktureinheiten, worin die Gruppe $-(C_nH_{2n})-$ für lineares oder verzweigtes $C_2$-$C_{12}$-Alkylen mit 2 bis 5 C-Atomen in der Kohlenstoffkette steht, das unsubstituiert oder mit $C_1$-$C_4$-Alkoxy substituiert ist. Die Zusammensetzungen sind intrinsisch elektrisch leitende thermoplastisch verformbare Massen.

EP 0 575 291 A2

Die Erfindung betrifft Zusammensetzungen aus a) mindestens einem oxidierten polykationischen in den 3,4-Stellungen alkoxysubstituierten Polythiophen und b) mindestens einem Polyanion eines thermoplastischen Polymeren mit sulfatierten Alkoholgruppen

$$-\overset{|}{\underset{|}{C}}-O-SO_3^{\ominus}$$

und/oder mit sulfonatalkylierten Alkoholgruppen

$$-\overset{|}{\underset{|}{C}}-O-(C_nH_{2n})-SO_3^{\ominus}$$

in wiederkehrenden Struktureinheiten, Verfahren zur Herstellung der Zusammensetzungen, die Verwendung der Zusammensetzungen zur Herstellung elektrisch leitender Formkörper und die Verwendung feinteiliger elektrisch leitender Zusammensetzungen als Füllstoffe für Kunststoffe.

Es ist bekannt, dass man durch elektrochemische oder chemische Polymerisation von alkoxysubstituierten Thiophenen, in Gegenwart nicht-nukleophiler Anionen elektrisch leitende Salze von polykationischen Polyheteroaromaten erhält. Die mechanischen und oft auch elektrischen Eigenschaften solcher in der Regel auf Anoden als Film abgeschiedener Salze von Polythiophenen sind für viele Anwendungen ungenügend.

In der DE-A-3 804 520 werden elektrisch leitende Polymere in Form freitragender Filme beschrieben, die aus Struktureinheiten eines 3-Alkoxy-4-alkylthiophens bestehen, das mit niedermolekularen Anionen wie zum Beispiel Hexafluorphosphat oder Tosylat dotiert ist. Die Filme werden als chemisch stabil und thermisch beständig bezeichnet. Sie weisen gute elektrische Leitfähigkeiten auf, wie es bei der Dotierung mit niedermolekularen Anionen zu erwarten ist. Ein wesentlicher Nachteil ist die Sprödigkeit der Filme, die keine thermoplastischen Eigenschaften besitzen.

In der DE-A-3 804 523 werden lösliche elektrisch leitende Polymere beschrieben, die Struktureinheiten eines Thiophens enthalten, das in der 3-Stellung mit einer $C_6$-$C_{30}$-Alkoxygruppe substituiert ist und mit niedermolekularen Anionen wie zum Beispiel Hexafluorphosphat oder Tosylat dotiert ist, und das besonders für Beschichtungszwecke geeignet ist.

In der EP-A-0 339 340 werden elektrisch leitende Polymere in Form von antistatischen Beschichtungen auf Kunststoffen beschrieben, die aus Struktureinheiten eines in den 3,4-Stellungen mit Alkylendioxyl substituierten Thiophens bestehen und die mit niedermolekularen Anionen wie zum Beispiel Hexafluorphosphat oder Tosylat dotiert sind. Über mechanische und thermoplastisch Eigenschaften der auf Elektroden gebildeten Abscheidungen werden keine Angaben gemacht.

In der EP-A-0 440 957 werden elektrisch leitende Polymere in Form von Dispersionen beschrieben, die aus Struktureinheiten von hydroxyl- oder alkoxysubstituierten Thiophenen und einem polymeren Polyanion wie zum Beispiel Polyacrylsäure oder Polystyrolsulfonsäure aufgebaut sind und die als antistatische Beschichtungsmittel verwendet werden.

In der US-A-5 061 401 werden elektrisch leitende Polymere in Form von Filmen beschrieben, die aus gegebenenfalls alkylsubstituierten Struktureinheiten von Heteroaromaten wie zum Beispiel Thiophen und Polyanionen von sulfatierten Polymeren aufgebaut sind. Diese Zusammensetzungen weisen gute elektrische Leitfähigkeiten und thermoplastische Eigenschaften auf. So kann zum Beispiel die elektrische Leitfähigkeit durch Verstrecken erhöht werden. Für die Zusammensetzung des Beispiels B5 wird die für unsubstituierte Thiophene erwartete relativ niedrige Leitfähigkeit gemessen. In der EP-A-0 446 172 werden Pressmassen und Füllstoffe mit diesen elektrisch leitenden Polymeren beschrieben.

Es wurde nun gefunden, dass man auch bei Zusammensetzungen mit oxidierten polyanionischen Thiophenen überraschend hohe elektrische Leitfähigkeiten und ausgezeichnete thermoplastische Eigenschaften erzielen kann, wenn man alkoxysubstituierte Thiophene verwendet, und die oxidative Polymerisation in Gegenwart von sulfatierten oder sulfonatalkylierten Polymeren durchführt. Die elektrische Leitfähigkeit ist gegenüber gleichartigen Zusammensetzungen mit Polypyrrolen und unsubstituerten Polythiophenen und sogar gegenüber alkoxysubstituierten Polythiophenen mit niedermolkularen Anionen überraschend verbessert und höher als erwartet. Die Zusammensetzungen weisen auch eine wesentlich verbesserte Beständigkeit gegenüber dem Einfluss von Luft, Feuchtigkeit und/oder Wärme (Oxidationsbeständigkeit) und damit eine bemerkenswert erhöhte Gebrauchsdauer auf, ohne dass die elektrische Leitfähigkeit wesentlich abfällt. Ferner ist die mechanische Stabilität wie zum Beispiel die Reissfestigkeit oder die Bruchfestigkeit sowie die thermoplastische Verformbarkeit durch Verstrecken (Bruchdehnung) erheblich verbessert; das Verstrecken kann sogar bei Raumtemperatur und nicht nur im Bereich der Glasumwandlungstemperatur durchgeführt werden, wobei die Dehnung 100 % und mehr betragen kann. Mit dem Verstrecken kann die mechanische Stabilität und die elektrische Leitfähigkeit um etwa bis zum Vier- bis Fünffachen der Grundleitfähigkeit verbessert werden. Mit den erfindungsgemässen Zusammensetzungen können sogar freitragende mechanisch stabile und transluzente Filme bis zum Bereich um 1 µm mit hohen elektrischen Leitfähigkeiten hergestellt werden, die für elektrooptische Anwendungen in Frage kommen. Ein ganz wesentlicher Vorteil ist auch, dass man die elektrischen Leitfähigkeiten durch die Wahl des Polyanions und eine Verstreckung gezielt einstellen und auf gewünschte Anwendungen abstimmen kann.

Ein Gegenstand der Erfindung ist eine Zusammensetzung aus

a) mindestens einem Polythiophen in oxidierter, polykationischer Form und wiederkehrenden Struktureinheiten der Formel I

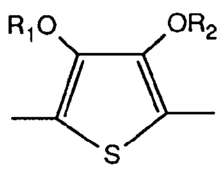

(I),

worin $R_1$ und $R_2$ unabhängig voneinander für lineares oder verzweigtes $C_1$-$C_{18}$-Alkyl oder $C_2$-$C_{18}$-Alkoxyalkyl stehen; oder $C_3$-$C_8$-Cycloalkyl, Phenyl oder Benzyl bedeuten, die unsubstituiert oder mit $C_1$-$C_6$-Alkyl, $C_1$-$C_6$-Alkoxy oder Halogen substituiert sind; oder $R_1$ und $R_2$ zusammen lineares $C_1$-$C_6$-Alkylen darstellen, das unsubstituiert oder mit $C_1$-$C_6$-Alkyl, $C_1$-$C_6$-Alkoxy, Halogen, $C_3$-$C_8$-Cycloalkyl, Phenyl, Benzyl, $C_1$-$C_4$-Alkylphenyl, $C_1$-$C_4$-Alkoxyphenyl, Halogenphenyl, $C_1$-$C_4$-Alkylbenzyl, $C_1$-$C_4$-Alkoxybenzyl oder Halogenbenzyl substituiert ist; und

b) mindestens einem Polyanion eines filmbildenden thermoplastischen Polymeren mit sulfatierten Alkoholgruppen

$$-\overset{|}{\underset{|}{C}}-O-SO_3^{\ominus}$$

und/oder mit sulfonatalkylierten Alkoholgruppen

$$-\overset{|}{\underset{|}{C}}-O-(C_nH_{2n})-SO_3^{\ominus}$$

in wiederkehrenden Struktureinheiten, worin die Gruppe $-(C_nH_{2n})-$ für lineares oder verzweigtes $C_2$-$C_{12}$-Alkylen mit 2 bis 5 C-Atomen in der Kohlenstoffkette steht, das unsubstituiert oder mit $C_1$-$C_4$-Alkoxy substituiert ist.

$R_1$ und $R_2$ stellen als Alkyl bevorzugt $C_1$-$C_{12}$-Alkyl, besonders bevorzugt $C_1$-$C_8$-Alkyl, und ganz besonders bevorzugt $C_1$-$C_4$-Alkyl dar. Einige Beispiele sind Methyl, Ethyl und die Isomeren von Propyl, Butyl, Pentyl, Hexyl, Heptyl, Octyl, Nonyl, Decyl, Uncecyl, Dodecyl, Tetradecyl, Hexadecyl und Octadecyl. Bevorzugte Alkylreste sind Methyl, Ethyl, n- und i-Propyl, n-, i- und t-Butyl, und ferner n-Pentyl und n-Hexyl.

$R_1$ und $R_2$ stellen als Alkoxyalkyl bevorzugt $C_1$-$C_{17}$-Alkoxymethyl und $C_1$-$C_{16}$-Alkoxyethyl, bevorzugter $C_1$-$C_{12}$-Alkoxymethyl und $C_1$-$C_{12}$-Alkoxyethyl, besonders bevorzugt $C_1$-$C_8$-Alkoxymethyl und $C_1$-$C_7$-Alkoxyethyl, und ganz besonders bevorzugt $C_1$-$C_4$-Alkoxymethyl und $C_1$-$C_4$-Alkoxyethyl. Einige bevorzugte Beispiele sind Methoxymethyl, Ethoxymethyl, n- oder i-Propyloxymethyl, n-,i- oder t-Butyloxymethyl, Methoxyethyl, Ethoxyethyl, n- oder i-Propyloxyethyl, n-,i- und t-Butyloxyethyl.

Wenn $R_1$ und $R_2$ Cycloalkyl bedeuten, so handelt es sich bevorzugt um $C_5$- oder $C_6$-Cycloalkyl, zum Beispiel Cyclopentyl und Cyclohexyl.

Bei den Substituenten für Cycloalkyl, Phenyl und Benzyl handelt es sich bevorzugt um $C_1$-$C_4$-Alkyl, $C_1$-$C_4$-Alkoxy, F, Cl und Br. Beispiele für Alkyl und Alkoxy sind besonders Methyl, Ethyl, Methoxy und Ethoxy. Einige Beispiele für solche substituierten Reste sind Methylcyclopentyl, Methylcyclohexyl, Methoxycyclohexyl, Methylphenyl, Dimethylphenyl, Ethylphenyl, Methoxyphenyl, Dimethoxyphenyl, Chlorphenyl, Methylbenzyl, Dimethylbenzyl, Ethylbenzyl, Methoxybenzyl, Dimethoxybenzyl und Chlorbenzyl.

In einer bevorzugten Ausführungsform bedeuten $R_1$ und $R_2$ zusammen für Alkylen. Es handelt sich dabei

bevorzugt um $C_1$-$C_4$-Alkylen und besonders bevorzugt $C_1$- oder $C_2$-Alkylen. Beispiele für Alkylen sind Methylen, Ethylen, 1,2- oder 1,3-Propylen, Butylen, Pentylen und Hexylen.

Bevorzugte Substituenten für $R_1$ und $R_2$ als Alkylen sind $C_1$-$C_6$-Alkyl, $C_1$-$C_6$-Alkoxy, Cyclohexyl, Phenyl und Benzyl, zum Beispiel Methyl, Ethyl, Propyl, Butyl, Methoxy, Ethoxy, Cyclohexyl, Phenyl und Benzyl.

In einer bevorzugten Untergruppe bedeuten $R_1$ und $R_2$ lineares oder verzweigtes $C_1$-$C_6$-Alkyl, besonders $C_1$-$C_4$-Alkyl, oder $R_1$ und $R_2$ zusammen $C_1$-$C_4$-Alkylen, besonders $C_1$- oder $C_2$-Alkylen, das unsubstituiert oder mit 1 oder 2 $C_1$-$C_6$-Alkylgruppen oder $C_1$-$C_6$-Alkoxygruppen substituiert ist.

In einer bevorzugten Ausführungsform stellen $R_1$ und $R_2$ $C_1$- oder $C_2$-Alkylen dar, das unsubstituiert oder mit $C_1$-$C_6$-Alkyl oder $C_1$-$C_6$-Alkoxy substituiert ist.

In einer besonders bevorzugten Ausführungsform stellen $R_1$ und $R_2$ einen Rest der Formel $-CHR_a-CHR_b-$ dar, worin $R_a$ und $R_b$ unabhängig voneinander für H oder $C_1$-$C_6$-Alkyl, besonders Methyl oder Ethyl, stehen.

In einer ganz besonders bevorzugten Ausführungsform entspricht die Struktureinheit der Formel I einem Rest der Formel

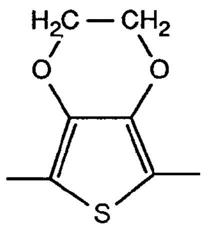

Die erfindungsgemässe Zusammensetzung enthält pro Struktureinheit des Polythiophens bevorzugt 0,1 bis 0,9, besonders bevorzugt 0,1 bis 0,6, insbesondere bevorzugt 0,15 bis 0,4 Struktureinheiten mit sulfatierten Alkoholgruppen

$$-\overset{|}{\underset{|}{C}}-OSO_3^{\ominus}$$

und/oder sulfonatalkylierten Alkoholgruppen

$$-\overset{|}{\underset{|}{C}}-O-(C_nH_{2n})-SO_3^{\ominus}.$$

Die Gruppe $-(C_nH_{2n})-$ stellt bevorzugt lineares oder verzweigtes $C_3$-$C_8$-Alkylen mit 3 bis 5 C-Atomen in der Kohlenstoffkette und besonders bevorzugt lineares $C_3$-$C_5$-Alkylen dar. Einige Beispiele sind Ethylen, Methylethylen, Dimethylethylen, 1,3-Propylen, Methyl-1,3-propylen, Dimethyl-1,3-propylen, Trimethyl-1,3-propylen, 1,4-Butylen, Methyl-1,4-butylen, Dimethyl-1,4-butylen, Trimethyl-1,4-butylen, Tetramethyl-1,4-butylen, 1,3- oder 1,5-Pentylen und 1,3-, 1,4-, 1,5- oder 1,6-Hexylen. Insbesondere handelt es sich bei der Gruppe $-(C_nH_{2n})-$ um Trimethylen und Tetramethylen.

Das in der erfindungsgemässen Zusammensetzung verwendete thermoplastische Polymer mit versalzten sulfatierten Alkoholgruppen

$$-\overset{|}{\underset{|}{C}}-OSO_3^{\ominus}M^{\oplus}$$

und/oder versalzten sulfonatalkylierten Alkoholgruppen

$$-\overset{|}{\underset{|}{C}}-O(C_nH_{2n})SO_3^{\ominus}M^{\oplus}$$

weist vorzugsweise eine Glasumwandlungstemperatur von -100 bis 350°C, besonders bevorzugt -50 bis 250°C auf, gemessen nach der DSC-Methode (Differential-Scannning-Calorimetry). $M^{\oplus}$ bedeutet ein Alkali-

metall- oder ein Ammoniumkation, die nachfolgend für die Polymeren näher beschrieben werden.

Die Zugfestigkeit dieses thermoplastischen Polymeren beträgt bevorzugt mindestens 5 MPa, besonders bevorzugt mindestens 10 MPa, gemessen nach DIN 53 455. Die Zugfestigkeit kann je nach Art der Polymeren bis zu 1000 MPa, bevorzugt bis zu 500 MPa und insbesondere bevorzugt bis zu 300 MPa betragen. Der Polymerisationsgrad kann z.B. 5 bis 10000, bevorzugt 10 bis 5000 und insbesondere bevorzugt 10 bis 1000 betragen.

Die Alkoholgruppen im thermoplastischen Polymer können teilweise oder vollständig sulfatiert und/oder sulfonatalkyliert sein. Das Verhältnis von freien Alkoholgruppen zu sulfatierten Alkoholgruppen

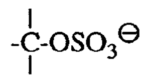

und/oder sulfonatalkylierten Alkoholgruppen

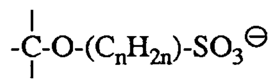

im thermoplastischen Polymer kann z.B. von 50:1 bis 1:50, bevorzugt 10:1 bis 1:10 betragen.

In einer bevorzugten Ausführungsform enthält das thermoplastische Polymer 5 bis 100 Mol-%, bevorzugter 10 bis 100 Mol-%, noch bevorzugter 20 bis 100 Mol-%, besonders bevorzugt 30 bis 100 Mol-% und insbesondere bevorzugt 30 bis 90 Mol-% Struktureinheiten sulfatierter Alkoholgruppen

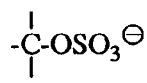

und/oder sulfonatalkylierter Alkoholgruppen

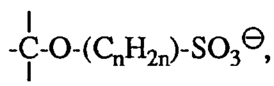,

wobei die restlichen Struktureinheiten entsprechende hydroxylgruppenhaltige oder hydroxylgruppenfreie Strukturelemente sind.

Die sulfatierten und/oder sulfonatalkylierten Alkoholgruppen können als sekundäre Gruppen

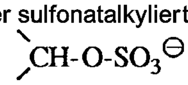 oder 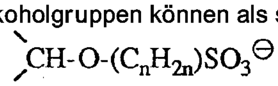

oder als tertiäre Gruppen

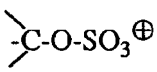

oder

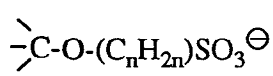

im Polymerrückgrat; oder in Seitengruppen des Polymeren als primäre Gruppen $-CH_2-O-SO_3^{\ominus}$ oder $-CH_2-O-(C_nH_{2n})SO_3^{\ominus}$ endständig, oder als sekundäre Gruppen

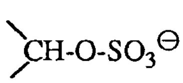 oder 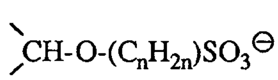

oder als tertiäre Gruppen

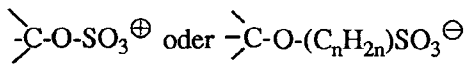

mittelständig gebunden sein.

Den thermoplastischen Polymeren können unterschiedliche Hydroxylgruppen enthaltende Polymere oder Mischungen davon zu Grunde liegen, z.B. Polyester, Polyesteramide, Polyurethane, Polyamide, Polycarbonate und Polyimide aus Hydroxylgruppen enthaltenden Monomeren; verseifte Polymerisate von Vinylestern oder -ethern; hydroxylierte Polydiolefine wie z.B. Polybutadien, Polyisopren oder Chloropren sowie deren Copolymere mit olefinischen Monomeren; Polyacrylate oder Polymethacrylate mit Hydroxyalkylresten in der Estergruppe; Polysiloxane mit Hydroxyalkylgruppen; reduzierte Polyketone oder Copolymere davon; Polyether aus Glycidylverbindungen und Diolen; Polyvinylphenole oder Copolymere von Vinylphenolen und olefinischen Comonomeren; sowie Copolymerisate von Vinylalkohol, oder Hydroxylalkyl enthaltenden Acrylaten oder Methacrylaten, oder hydroxylierten Diolefinen mit ethylenisch ungesättigten Comonomeren wie z.B. Acrylnitril, Olefinen, Diolefinen, Vinylchlorid, Vinylidenchlorid, Vinylfluorid, Vinylidenfluorid, Styrol, α-Methylstyrol, Maleinsäureanhydrid, Maleinsäureimid, Vinylethern und Vinylestern.

Den sulfatierten und/oder sulfonatalkylierten thermoplastischen Polymeren liegen bevorzugt Polymere aus der Gruppe Polyaddukte aus Glycidylverbindungen mit durchschnittlich mehr als einer Epoxidgruppe und einem Diol; Homo- und Copolymere von Hydroxyalkylacrylaten beziehungsweise -methacrylaten; Homo- und Copolymere von Vinylalkohol; Homo- und Copolymere von Butadien, Isopren und Chloropren, deren Doppelbindungen teilweise oder ganz hydroxyliert sind; Homo- und Copolymere von Vinylphenolen;Polyimide aus hydrierten Ketotetracarbonsäuren, besonders Benzophenontetracarbonsäuren; Hydroxyalkylpolysiloxane; und Polyester, Polyamide, Polyurethane und Polyimide aus $C_4$-$C_{12}$-Alkenylendiolen beziehungsweise -diaminen, deren Doppelbindung hydroxyliert sind, zu Grunde.

Die thermoplastischen Polymere sind bevorzugt entweder sulfatiert oder sulfonatalkyliert.

Bei dem thermoplastischen Polymer kann es sich z.B. um ein mindestens teilweise sulfatiertes und/oder sulfonatalkyliertes Polyaddukt aus a) einer Glycidylverbindung mit durchschnittlich mehr als einer Epoxidgruppe und b) einem Diol handeln, das Gruppen

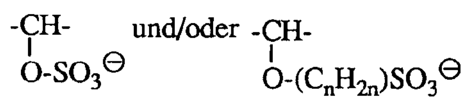

in der Polymerkette enthält, worin die Gruppe $-C_nH_{2n}-$ die zuvor angegebenen Bedeutungen hat, einschliesslich der Bevorzugungen.

Den Polyaddukten liegen bevorzugt Glycidylverbindungen mit durchschnittlich zwei Epoxidgruppen im Molekül zu Grunde.

Als Glycidylverbindungen kommen vor allem solche mit zwei an ein Heteroatom (z.B. Schwefel, vorzugsweise Sauerstoff oder Stickstoff) gebundenen Glycidylgruppen, β-Methylglycidylgruppen oder 2,3-Epoxycyclopentylgruppen in Frage; genannt seien insbesondere Bis-(2,3-epoxycyclopentyl)-ether; Diglycidylether von mehrwertigen aliphatischen Alkoholen wie 1,4-Butandiol oder von Polyalkylenglykolen wie Polypropylenglykol; Diglycidylether von cycloaliphatischen Polyolen, wie 2,2-Bis-(4-hydroxycyclohexyl)-propan; Diglycidylether von mehrwertigen Phenolen, wie Resorcin, Bis-(p-hydroxyphenyl)-methan, 2,2-Bis-(p-hydroxyphenyl)-propan (=Diomethan), 2,2-Bis-(4'-hydroxy-3',5'-dibromphenyl)-propan, 1,3-Di-(p-hydroxyphenyl)-ethan; Di-(β-methylglycidyl)-ether der oben angeführten zweiwertigen Alkohole oder zweiwertigen Phenole; Diglycidylester von Dicarbonsäuren, wie Phthalsäure, Terephthalsäure, $\Delta_4$-Tetrahydrophthalsäure und Hexahydrophthalsäure; N,N-Diglycidylderivate von primären Aminen und Amiden und heterocyclischen, zwei N-Atome enthaltenden Stickstoffbasen, und N,N'-Diglycidylderivate von disekundären Diamiden und Diaminen, wie N,N-Diglycidylanilin, N,N-Diglycidyltoluidin, N,N-Diglycidyl-p-aminophenyl-methyl-ether, N,N'-Dimethyl-N,N'-diglycidyl-bis-(p-aminophenyl)-methan; N',N"-Diglycidyl-N-phenyl-isocyanurat; N,N'-Diglycidylethylenharnstoff; N,N'-Diglycidyl-5,5-dimethyl-hydantoin, N,N'-Diglycidyl-5-isopropyl-hydantoin, N,N-Methylen-bis-(N',N'- diglycidyl-5,5-dimethylhydantoin), 1,3-Bis-(N-glycidyl-5,5-dimethylhydantoin)-2-hydroxypropan; N,N'-Diglycidyl-5,5-dimethyl-6-isopropyl-5,6-dihydro-uracil.

Die Glycidylverbindungen können mit aliphatischen, cycloaliphatischen oder aromatischen Diolen zu den bevorzugten Polyaddukten umgesetzt werden, wobei durch Addition an der Glycidylgruppe eine sekundäre Alkoholgruppe gebildet wird, die sulfatiert und/oder sulfonatalkyliert werden kann.

Die Glycidylverbindungen können aber auch mit primären, aliphatischen, cycloaliphatischen oder aromatischen Monoaminen (z.B. Anilin, Toluidin, $C_1$-$C_{12}$-Alkylaminen, $C_2$-$C_{12}$-Hydroxyalkylaminen), aliphatischen,

cycloaliphatischen oder aromatischen Dicarbonsäuren (z.B. Maleinsäure, Adipinsäure, Trimethyladipinsäure, Sebacinsäure, Azelainsäure, Bernsteinsäure, Dodecylbernsteinsäure, Phthalsäure, Terephthalsäure, $\Delta_4$-Tetrahydrophthalsäure, Hexahydrophthalsäure, 4-Methylhexahydrophthalsäure, 3,6-Endomethylen-$\Delta_4$-tetrahydrophthalsäure, 4-Methyl-3,6-endomethylen-$\Delta_4$-tetrahydrophthalsäure) oder aliphatischen, cycloaliphatischen, heterocyclischen oder aromatischen Bissekundäraminen oder Bissekundärcarbonsäureamiden (z.B. N,N'-Dimethylethylendiamin, N,N'-Dimethylpropylen-1,3-diamin, N,N'-Dimethylhexamethylendiamin, N,N'-Dicyclohexylhexamethylendiamin, N,N',N"-Trimethyldiethylentriamin, N,N'-Diethylpropylen-1,3-diamin, N-Methyl-3,5,5-trimethyl-3-(methylaminomethyl)-cyclohexylamin, N,N'-dimethylierte oder -diethylierte aromatische Diamine, z.B. m- oder p-Phenylendiamin, Bis-(4-aminophenyl)-methan oder -sulfon, 2,2-Bis-(4-aminophenyl)-propan, N,N-Dimethyl-m-xylylendiamin, sowie Ethylenharnstoff, 5,5-Dimethylhydantoin, 5-Isopropylhydantoin, N,N-Methylen-bis-5,5-dimethylhydantoin, 1,3-Bis-(5,5-dimethyl)-2-hydroxypropan, 5,5-Dimethyl-6-isopropyl-5,6-dihydrouracil), durch Polyaddition zu linearen Polyaddukten umgesetzt werden.

Bevorzugt ist eine erfindungsgemässe Zusammensetzung, worin das Polyaddukt

a) 100 bis 5 Mol-% gleiche oder verschiedene Struktureinheiten der Formel II und/oder IIa

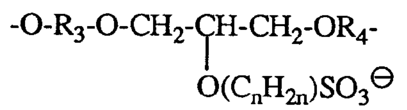

(II),

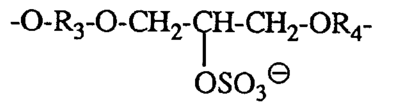

(IIa),

und

b) 95 bis 0 Mol-% gleiche oder verschiedene Struktureinheiten der Formel III

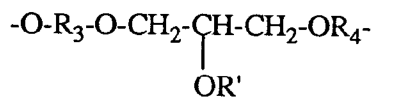

(III),

enthält, bezogen auf die Strukturelemente des Polyaddukts, wobei $R_3$ und $R_4$ unabhängig voneinander den um zwei Hydroxylgruppen verminderten Rest eines Diols mit aliphatischen oder aromatischen Diolgruppen darstellen, und R' H, $C_1$-$C_{20}$-Alkyl, $C_1$-$C_2$ -Acyl oder mit einem $C_1$-$C_{20}$-Kohlenwasserstoffrest N-substituiertes Aminocarbonyl bedeutet.

R' in der Bedeutung von $C_1$-$C_{20}$-Alkyl kann linear oder verzweigt sein. R' in der Bedeutung von Acyl kann z.B. $C_1$-$C_{20}$-Alkyl-CO-, $C_5$-$C_8$-Cycloalkyl-CO-, $C_1$-$C_{15}$-Alkyl-$C_5$-$C_8$-cycloalkyl-CO, $C_5$-$C_8$-Cycloalkyl-$CH_2$-CO-, $C_1$-$C_{14}$-Alkyl-$C_5$-$C_8$-cycloalkyl-$CH_2$-CO, Phenyl-CO, Benzyl-CO, $C_1$-$C_{14}$-Alkylphenyl-CO- oder -benzyl-COsein. Bei dem Kohlenwasserstoffrest im Aminocarbonyl kann es sich z.B. um $C_1$-$C_{20}$-Alkyl-, $C_5$-$C_8$-Cycloalkyl-, $C_1$-$C_{15}$-Alkyl-$C_5$-$C_8$-cycloalkyl-, $C_5$-$C_8$-Cycloalkyl-$CH_2$-, $C_1$-$C_{14}$-Alkyl-$C_5$-$C_8$-cycloalkyl-$CH_2$-, Phenyl-, Benzyl-, $C_1$-$C_{14}$-Alkylphenyl- oder -benzyl- handeln. R' steht bevorzugt für H, $C_1$-$C_6$-Acyl oder $C_1$-$C_4$-Alkyl. Besonders bevorzugt steht R' für H.

Bevorzugt sind 100 bis 20, besonders bevorzugt 100 bis 30 Mol% Struktureinheiten der Formel II und/oder IIa, und 0 bis 80, besonders bevorzugt 0 bis 70 Mol% Struktureinheiten der Formel III enthalten. Ganz besonders bevorzugt sind 90 bis 60 Mol% Struktureinheiten der Formel II und/oder IIa und 10 bis 40 Mol% Struktureinheiten der Formeln III enthalten.

In einer bevorzugten Ausführungsform stellen $R_3$ und $R_4$ gleiche Reste dar. $R_3$ und $R_4$ in der Bedeutung als Rest mit aliphatischen Diolgruppen enthält bevorzugt 2 bis 12, besonders 2 bis 8 C-Atome. Die Hydroxylgruppen können an offenkettige oder cyclische aliphatische Reste gebunden sein. Als aliphatischer Rest kommt z.B. lineares oder verzweigtes $C_2$-$C_{12}$-Alkylen, $C_3$-$C_8$-Cycloalkylen, $C_1$-$C_4$-Alkyl-$C_5$-$C_8$-cycloalkylen, Cyclohexylmethylen oder Cyclohexyldimethylen in Frage. Beispiele sind Ethylen, 1,2- oder 1,3-Propylen, 1,2-, 1,3- oder 1,4-Butylen, 1,2-, 1,3-, 1,4- oder 1,5-Pentylen, 1,2-, 1,3-, 1,4-, 1,5 oder 1,6-Hexylen, Heptylen, Octylen, Nonylen, Decylen, Undecylen, Dodecylen, 1,3-Cyclopentylen, 1,3- oder 1,4-Cyclohexylen, 2-Methyl-1,4-cyclohexylen und Cyclohexyl-1,4-dimethylen.

Die aromatischen Diolgruppen der für die Polyaddukte verwendeten Diole sind insbesondere phenolische Gruppen. Die Diolreste mit phenolischen Gruppen enthalten bevorzugt 6-30, besonders bevorzugt 6-20 C-Atome. Eine bevorzugte Ausführungsform sind Zusammensetzungen, worin $R_3$ und $R_4$ unabhängig voneinander einen Rest der Formel IV

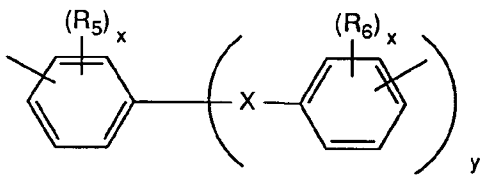

(IV)

darstellen, worin X eine direkten Bindung, $C_1$-$C_4$-Alkylen, $C_2$-$C_{12}$-Alkyliden, $C_5$-$C_8$-Cycloalkyliden, -O-, -S-, -SO-, $-SO_2-$, -CO-, $-CO_2-$, -N($C_1$-$C_4$-Alkyl)- oder $-Si(CH_3)_2-$ bedeutet, $R_5$ und $R_6$ unabhängig voneinander H, Halogen, $C_1$-$C_4$-Alkyl oder $C_1$-$C_4$-Alkoxy sind, und x 1 oder 2 bedeutet und y für 0 oder 1 steht.

X stellt bevorzugt eine direkte Bindung, Methylen, Ethylen, $C_2$-$C_6$-Alkyliden, Cyclohexyliden oder Cyclopentyliden, -O- oder -S- dar. $R_5$ und $R_5$ stehen vorzugsweise für H oder Methyl und y steht bevorzugt für 1.

Insbesondere bedeuten $R_3$ und $R_4$ den Rest

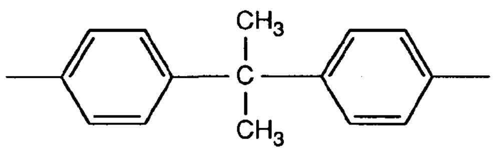

.

Eine weitere bevorzugte Ausführungsform sind Zusammensetzungen, worin das thermoplastische Polymer ein mindestens teilweise sulfatierter und/oder sulfonatalkylierter Polyvinylalkohol oder sulfatiertes und/oder sulfonatalkyliertes Polyvinylalkohol-Copolymer mit Gruppen

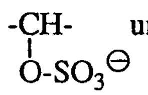

und/oder

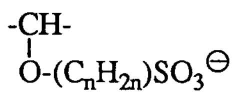

ist. Sulfatierte und/oder sulfonatalkylierte Polyvinylalkohol-Copolymere sind bevorzugt in der Zusammensetzung enthalten.

Bevorzugt sind solche Zusammensetzungen mit Polyvinylalkoholcopolymeren, worin das Copolymer

a) 90 bis 5 Mol% Struktureinheiten der Formel V und/oder Va

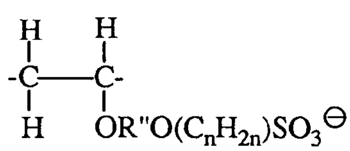

(V),

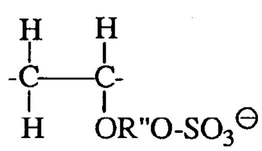

(Va),

und

b) 95 bis 10 Mol% gleiche oder verschiedene Struktureinheiten der Formel VI

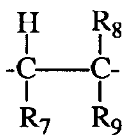

(VI),

enthält, worin $R_7$ für H, $C_1$-$C_6$-Alkyl, -$COOR_{10}$ oder -$COO^{\ominus}$ steht, $R_8$ H, F, Cl, CN oder $C_1$-$C_6$-Alkyl bedeutet, und $R_9$ H, OH, -R"OH, F, Cl, CN, $R_{10}$-O-, $C_1$-$C_{12}$-Alkyl, -$COO^{\ominus}$, -$COOR_{10}$, -OCO-$R_{10}$, Methylphenyl oder Phenyl darstellt, wobei $R_{10}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, ($C_1$-$C_{12}$-Alkyl)phenyl, Benzyl oder ($C_1$-$C_{12}$-Alkyl)benzyl darstellt und R" für lineares oder verzweigtes $C_2$-$C_{18}$-Alkylen, Poly($C_2$-$C_6$-oxaalkylen) mit 2 bis 6 Oxaalkyleneinheiten steht, und die Gruppe -($C_nH_{2n}$)- die zuvor angegebene Bedeutung hat.

Bevorzugt sind 60 bis 10, besonders 60 bis 20 Mol% Struktureinheiten der Formel IV, und 40 bis 90, besonders 40 bis 80 Mol% Strukturelemente der Formel V enthalten.

R" enthält als Alkylen bevorzugt 2 bis 12, besonders bevorzugt 2 bis 8, und insbesondere bevorzugt 2 bis 6 C-Atome. Beispiele sind Ethylen und die Isomeren von Propylen, Butylen, Pentylen, Hexylen, Heptylen, Octylen, Nonylen, Decylen, Undecylen, Dodecylen, Tetradecylen, Hexadecylen und Octadecylen. Bevorzugt sind Ethylen, 1,2- und 1,3-Propylen, 1,2-, 1,3- und 1,4-Butylen, 1,2-, 1,3-, 1,4- und 1,5-Pentylen und 1,2-, 1,3-, 1,4-, 1,5- und 1,6-Hexylen.

R" in der Bedeutung von Poly(oxaalkylen) enthält bevorzugt 2 bis 4 Oxaalkyleneinheiten, und bevorzugt 2 bis 4, besonders bevorzugt 2 oder 3 C-Atome im Alkylenrest.

$R_7$ steht bevorzugt für H. Bedeutet $R_7$ Alkyl, so handelt es sich bevorzugt um Methyl oder Ethyl. Bedeutet $R_7$ -$COOR_{10}$, so stellt $R_{10}$ bevorzugt $C_1$-$C_{12}$-, besonders $C_1$-$C_6$-Alkyl dar.

Bedeutet $R_8$ Alkyl, so handelt es sich bevorzugt um $C_1$-$C_4$-Alkyl, z.B. Methyl, Ethyl, n-Propyl und n-Butyl. $R_8$ steht bevorzugt für H, Cl oder $C_1$-$C_4$-Alkyl.

Bedeutet $R_9$ die Gruppe $R_{10}$-O-, so stellt $R_{10}$ bevorzugt $C_1$-$C_{12}$-, besonders $C_1$-$C_6$-Alkyl dar. Bedeutet $R_9$ Alkyl, so enthält es bevorzugt 1 bis 6, besonders 1 bis 4 C-Atome. Bedeutet $R_9$ die Gruppe -$COOR_{10}$, so stellt $R_{10}$ bevorzugt $C_1$-$C_{12}$-, besonders $C_1$-$C_6$-Alkyl, Cyclopentyl oder Cyclohexyl dar. Bedeutet $R_9$ die Gruppe -OCO-$R_{10}$, so stellt $R_{10}$ bevorzugt $C_1$-$C_{12}$-, besonders $C_1$-$C_6$-Alkyl, Phenyl oder Benzyl dar.

In einer bevorzugten Ausführungsform stehen $R_7$ für H, $R_8$ für H, F, Cl, Methyl oder Ethyl, und $R_9$ für H, OH, F, Cl, CN, $C_1$-$C_4$-Alkyl, $C_1$-$C_6$-Alkoxy, -COO-$C_1$-$C_6$-Alkyl, -OOC-$C_1$-$C_6$-Alkyl oder Phenyl.

Besonders bevorzugt sind Zusammensetzungen, worin in Formel VI $R_7$ H bedeutet, $R_8$ H oder Methyl darstellt, und $R_9$ H, OH, CN, Methyl, $OCH_3$ oder -$COOCH_3$ bedeutet.

Ganz besonders bevorzugt sind Zusammensetzungen, die 20 bis 60 Mol-% Struktureinheiten der Formel V, 50 bis 40 Mol-% Struktureinheiten der Formel -$CH_2$-$CH_2$- und 0 bis 40 Mol-% Struktureinheiten der Formel -$CH_2$-CH(OH)- enthalten, wobei sich die Mol-% zu 100 Prozent addieren.

Eine weitere bevorzugte Ausführungsform sind Zusammensetzungen, worin das thermoplastische Polymer ein sulfatiertes und/oder sulfonatalkyliertes Polymer eines teilhydroxylierten Polybutadiens, Chloroprens oder Polyisoprens ist.

Eine bevorzugte Ausführungsform sind solche Zusammensetzungen, die 5 bis 100 Mol-% Struktureinheiten der Formeln VII und/oder VIIa

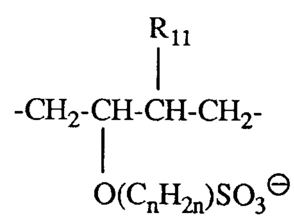

(VII),

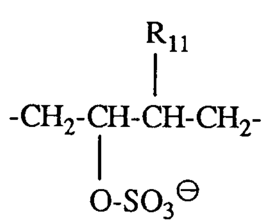

(VIIa),

und 0 bis 95 Mol-% Struktureinheiten der Formeln VIII und/oder VIIIa,

$$-CH_2-CH=CH-CH_2- \quad (VIII),$$

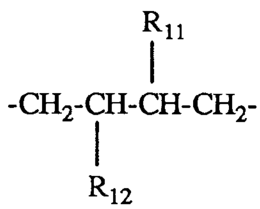

(VIIIa)

enthalten, worin $R_{11}$ und $R_{12}$ unabhängig voneinander für H, OH oder Cl stehen und die Gruppe $-C_nH_{2n}-$ die zuvor angegebene Bedeutung hat, einschliesslich der Bevorzugungen.

Bevorzugt sind in dieser Zusammensetzung 10 bis 100 Mol-%, besonders 20 bis 60 Mol-% Struktureinheiten der Formeln VII und/oder VIIa und 90 bis 0 Mol-%, besonders 80 bis 40 Mol-% Struktureinheiten der Formeln VIII und/oder VIIIa enthalten. $R_{11}$ steht bevorzugt für H oder Cl und $R_{12}$ steht bevorzugt für H.

Eine weitere bevorzugte Ausführungsform sind Zusammensetzungen, worin das thermoplastische Polymere ein sulfatiertes und/oder sulfonatalkyliertes Polyimid mit Strukturelementen der Formel IX

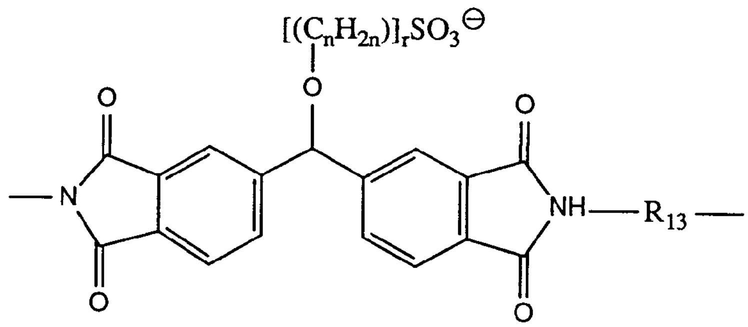

(IX)

darstellt, worin $R_{13}$ für unsubstituiertes oder mit $C_1$-$C_6$-Alkyl oder $C_1$-$C_6$-Alkoxy substituiertes $C_6$-$C_{12}$-Arylen oder $C_5$-$C_8$-Cycloalkylen oder für den Rest

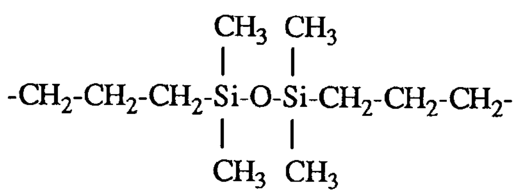

steht, r 0 oder 1 bedeutet und die Gruppe $-C_nH_{2n}-$ die zuvor angegebene Bedeutung hat, einschliesslich der Bevorzugungen.

Eine andere bevorzugte Ausführungsform sind Zusammensetzungen, worin das thermoplastische Polymere ein sulfatiertes und/oder sulfonatalkyliertes Polyamid mit Strukturelementen der Formel X

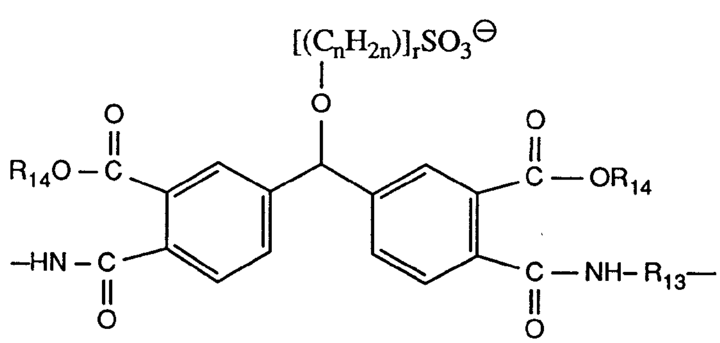

(X)

darstellt, worin
$R_{13}$ für unsubstituiertes oder mit $C_1$-$C_6$-Alkyl oder $C_1$-$C_6$-Alkoxy substituiertes $C_6$-$C_{12}$-Arylen oder $C_5$-$C_8$-Cycloalkylen oder für den Rest

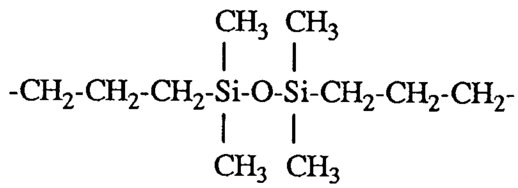

steht, $R_{14}$ $C_1$-$C_{12}$Alkyl bedeutet, r für 0 oder 1 steht und die Gruppe $-C_nH_{2n}-$ die zuvor angegebene Bedeutung hat, einschliesslich der Bevorzugungen.

Eine ganz besonders bevorzugte erfindungsgemässe Zusammensetzung ist jene, worin das filmbildende thermoplastische Polymer

a) 100 bis 50 Mol-% gleiche oder verschiedene Struktureinheiten der Formel II und/oder IIa

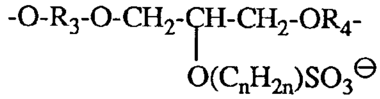 (II),

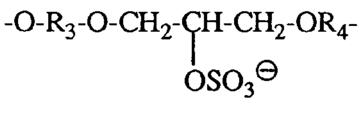 (IIa),

und

b) 0 bis 50 Mol-% gleiche oder verschiedene Struktureinheiten der Formel III

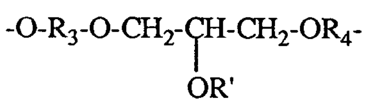 (III),

enthält, bezogen auf die Struktureinheiten des Polyaddukts, wobei $R_3$ und $R_4$ unabhängig voneinander den um zwei Hydroxylgruppen verminderten Rest eines Diols mit aliphatischen oder aromatischen Diolgruppen darstellen, und R' H, $C_1$-$C_{20}$-Alkyl, $C_1$-$C_{20}$-Acyl oder mit einem $C_1$-$C_{20}$-Kohlenwasserstoffrest N-substituiertes Aminocarbonyl bedeutet. Insbesondere enthält das Polymer 60 bis 100, ganz besonders 60 bis 90 Mol-% Strukturelemente der Formeln II und/oder IIa und 40 bis 0, ganz besonders 40 bis 10 Mol-% Strukturelemente der Formel III. R' bedeutet bevorzugt H. Diese Zusammensetzung enthält besonders bevorzugt ein Polythiophen in oxidierter, polykationischer Form und wiederkehrenden Struktureinheiten der Formel I

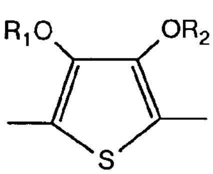 (I),

worin $R_1$ und $R_2$ unabhängig voneinander für lineares oder verzweigtes $C_1$-$C_6$-Alkyl oder $R_1$ und $R_2$ zusammen Methylen oder den Rest $-CHR_a-CHR_b-$ darstellen, worin $R_a$ und $R_b$ unabhängig voneinander H, Methyl oder Ethyl und besonders bevorzugt H bedeuten.

Eine bevorzugte Ausführungsform sind diese Zusammensetzungen, worin $R_3$ und $R_4$ unabhängig voneinander einen Rest der Formel IV

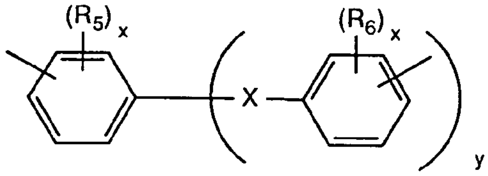

(IV)

darstellen, worin X eine direkte Bindung, $C_1$-$C_4$-Alkylen, $C_2$-$C_{12}$-Alkyliden, $C_5$-$C_8$-Cycloalkyliden, -O-, -S-, -SO-, -$SO_2$-, -CO-, -$CO_2$-, -N($C_1$-$C_4$-Alkyl)- oder -Si$(CH_3)_2$- bedeutet, $R_5$ und $R_5$ unabhängig voneinander H, Halogen, $C_1$-$C_4$-Alkyl oder $C_1$-$C_4$-Alkoxy sind, und x 1 oder 2 bedeutet und y für 0 oder 1 steht.

X stellt bevorzugt eine direkte Bindung, Methylen, Ethylen, $C_2$-$C_6$-Alkyliden, Cyclohexyliden oder Cyclopentyliden, -O- oder -S- dar. $R_5$ und $R_5$ stehen vorzugsweise für H oder Methyl und y steht bevorzugt für 1.

Insbesondere bedeuten $R_3$ und $R_4$ den Rest

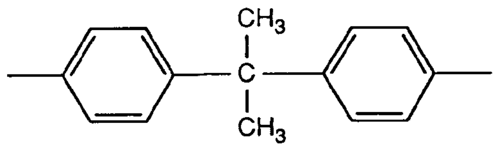

,

und besonders bevorzugt entsprechen die Strukturelemente des Polythiophens Resten der Formel

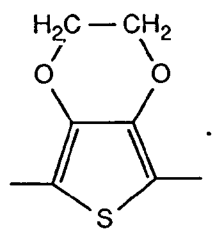

.

Enthält die Zusammensetzung mehr als ein Polyanion eines thermoplastischen Polymeren mit sulfatierten und/oder sulfonatalkylierten Alkoholgruppen, so sind binäre oder ternäre Mischungen bevorzugt.

Die Polyanionen der Komponente b) in der erfindungsgemässen Zusammensetzung leiten sich von bekannten oder nach an sich bekannten Verfahren herstellbaren polymeren Salzen ab. Es handelt sich um thermoplastische Polymere mit sulfatierten Alkoholgruppen

$$-\overset{|}{\underset{|}{C}}-O-SO_3^{\ominus}M^{\oplus}$$

und/oder mit sulfonatalkylierten Alkhoholgruppen

$$-\overset{|}{\underset{|}{C}}-O-(C_nH_{2n})-SO_3^{\ominus}M^{\oplus}$$

in wiederkehrenden Struktureinheiten, wobei $M^{\oplus}$ für ein Alkalimetall- oder Ammoniumkation steht.

Das Ammoniumkation kann z.B. $NH_4^{\oplus}$, ein protoniertes, primäres, sekundäres oder tertiäres Amin, oder quaternäres Ammonium oder Pyridinium sein. Das primäre Ammonium kann 1 bis 18 C-Atome, besonders 1 bis 12 und insbesondere 1 bis 6 C-Atome, das sekundäre Ammonium 2 bis 24, besonders 2 bis 12, insbesondere 2 bis 8 C-Atome, das tertiäre Ammonium 3 bis 30, besonders 3 bis 18 und insbesondere 3 bis 12 C-Atome, und das quaternäre Ammonium 4 bis 36, besonders 4 bis 24 und insbesondere 4 bis 18 C-Atome enthalten.

Bevorzugte polymere Salze sind solche, worin $M^{\oplus}$ $Li^{\oplus}$, $Na^{\oplus}$ oder $K^{\oplus}$ darstellt, oder $R_{15}R_{16}R_{17}R_{18}N^{\oplus}$ ist, worin $R_{15}$, $R_{16}$, $R_{17}$ und $R_{18}$ unabgängig voneinander H, unsubstituiertes oder Hydroxyl-substituiertes $C_1$-$C_{18}$-Alkyl, Phenyl, ($C_1$-$C_{12}$-Alkyl)phenyl, ($C_1$-$C_{12}$-Alkyl)benzyl, $C_5$-$C_7$-Cycloalkyl, ($C_1$-$C_{12}$-Alkyl)-$C_5$-$C_7$-cycloalkyl darstellen, oder $R_{15}$ und $R_{16}$ zusammen Tetramethylen, Pentamethylen oder 3-Oxapentylen sind und $R_{17}$ und $R_{18}$ die

zuvor angegebenen Bedeutungen haben. Eine bevorzugte Ausführungsform sind Polymere, worin mindestens einer der Reste $R_{15}$ bis $R_{18}$ nicht H bedeutet. Besonders bevorzugt sind Polymere, worin $R_{15}$ bis $R_{17}$ $C_1$-$C_6$-Alkyl und $R_{18}$ H bedeuten.

$R_{15}$ bis $R_{18}$ können in der Bedeutung von Alkyl linear oder verzweigt sein und bevorzugt 1 bis 12, besonders 1 bis 6 C-Atome enthalten. Beispiele sind Methyl, Ethyl, n- und i-Propyl, n-, i- und t-Butyl, Pentyl, Hexyl, Heptyl, Octyl, Nonyl, Decyl, Undecyl, Dodecyl, Tetradecyl, Hexadecyl und Octadecyl.

$R_{15}$ bis $R_{18}$ in der Bedeutung von Hydroxyalkyl kann linear oder verzweigt sein und enthält bevorzugt 2 bis 18, besonders 2 bis 12 und insbesondere 2 bis 6 C-Atome. Einige Beispiele sind 1-Hydroxyeth-2-yl, 1-oderHydroxy-prop-3-yl, 1-Hydroxybut-4-yl, 1-Hydroxyhex-6-yl.

Beispiele für Alkylphenyl und Alkylbenzyl sind Methylphenyl, Dimethylphenyl, Ethylphenyl, n- oder i-Propylphenyl, n-, i- oder t-Butylphenyl, Hexylphenyl, Octylphenyl, Decylphenyl, Dodecylphenyl und entsprechend alkylierte Benzylreste.

$R_{15}$ bis $R_{18}$ in der Bedeutung von Cycloalkyl stellen besonders Cyclopentyl oder Cyclohexyl dar.

$R_{15}$ bis $R_{18}$ in der Bedeutung von Alkylcycloalkyl ist bevorzugt ($C_1$-$C_{12}$-Alkyl)cyclopentyl oder -cyclohexyl, z.B. Methyl- oder Ethylcyclopentyl oder -cyclohexyl.

Besonders bevorzugt stehen $R_{15}$ bis $R_{18}$ für $C_1$-$C_6$-Alkyl oder $R_{15}$ bis $R_{17}$ für $C_1$-$C_6$-Alkyl und $R_{18}$ für H.

Die erfindungsgemäss zu verwendenden polymeren Salze sind bekannt oder können nach allgemein bekannten Verfahren hergestellt werden, wobei je nach Art der verwendeten Polymeren und der Verfahrensbedingungen Hydroxylgruppen in den verwendeten Monomeren mit üblichen Schutzgruppen geschützt werden können. Hydroxylgruppenhaltige Polymere sind vielfach beschrieben oder können nach an sich bekannten Verfahren erhalten werden.

Die erfindungsgemäss zu verwendenden thermoplastischen polymeren Salze sind in bekannter Weise erhältlich, indem man ein thermoplastisches Polymer, das in wiederkehrenden Struktureinheiten Alkoholgruppen

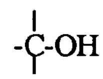

enthält, mit einem Sulfatierungsreagenz (zum Beispiel Pyridin·$SO_3$) beziehungsweise einem Sulton der Formel

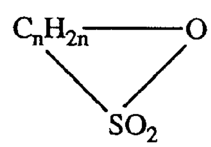

in Gegenwart eines inerten Lösungsmittels und einer Alkalimetallbase oder eines Amins umsetzt, und danach das polymere Salz isoliert. Die Umsetzung kann stufenweise zunächst mit einem Unterschuss eines Sulfatierungsreagenzes beziehungsweise einem Sulton und danach mit einem Sulton beziehungsweise Sulfatierungsreagenz vorgenommen werden, um Polymere mit Sulfatgruppen und Sulfonatalkylgruppen zu erhalten.

Geeignete inerte Lösungsmittel sind besonders polare aprotische Lösungsmittel, wobei sich die Wahl des Lösungsmittels hauptsächlich nach der Löslichkeit der Hydroxylgruppen enthaltenden Polymere richtet. Die Lösungsmittel können alleine oder in Mischung aus mindestens 2 Lösungsmitteln verwendet werden. Beispiele sind: Ether wie Dibutylether, Tetrahydrofuran, Dioxan, Methylenglykol, Dimethylethylenglykol, Dimethyldiethylenglykol, Diethyldiethylenglykol, Dimethyltriethylenglykol, halogenierte Kohlenwasserstoffe wie Methylenchlorid, Chloroform, 1,2-Dichlorethan, 1,1,1-Trichlorethan, 1,1,2,2-Tetrachlorethan, Carbonsäureamide und Lactame wie N,N-Dimethylformamid, N,N-Diethylformamid, N,N-Dimethylacetamid, N,N-Diethylacetamid, N-Methyl-γ-butyrolactam, N-Methyl-ε-caprolactam , N-Methylpyrrolidon, N-Acetylpyrrolidon, Tetramethylharnstoff, Hexamethylphosphorsäuretriamid, Sulfoxide wie Dimethylsulfoxid, Sulfone wie Dimethylsulfon, Diethylsulfon, Trimethylensulfon, Tetramethylensulfon, N-Methylpyrrolidin, N-Methylpiperidin, N-Methylmorpholin, substituierte Benzole wie Benzonitril, Chlorbenzol, o-Dichlorbenzol, 1,2,4-Trichlorbenzol, Nitrobenzol.

Die Reaktionstemperatur beträgt z.B. 40 bis 200°C, vorzugsweise 60 bis 150°C. Nach Beendigung der Reaktion kann das polymere Salz mit einem Nichtlösungsmittel, vorteilhaft Wasser, ausgefällt, abfiltiert, gewaschen und getrocknet werden.

Sulfonatalkylierte Phenoxyharze sind zum Beispiel in der BE-B-847 353 beschrieben. Sulfonatalkylierte Polyvinylalkohole sind zum Beispiel in der EP-A-0 099 631 und in der FR-B-1 584 814 beschrieben. Sulfatierte

Polymere sind zum Beispiel in der US-A-5 061 401 beschrieben.

Die erfindungsgemäss zu verwendenden polymeren Salze von sulfatierten und/oder sulfonatalkylierten Hydroxylgruppen enthaltenden Polymeren haben thermoplastische Eigenschaften. Ihre Glasumwandlungstemperatur ist im Vergleich zu den Ausgangspolymeren im wesentlichen unverändert und sie zeichnen sich durch ihre mechanische Festigkeit aus, z.B. durch eine hohe Zug- und Biegefestigkeit und hohe Flexibilität. Sie eignen sich überraschend ganz besonders als Polyanionen für elektrisch leitende Polykationen von alkoxysubstituierten Polyhthiophenen.

Die erfindungsgemässen Zusammensetzungen werden in an sich bekannter Weise hergestellt, indem man

a) in einer organischen, wässrig-organischen oder wässrigen Lösung ein Thiophen der Formel I in Gegenwart mindestens eines Salzes von einem filmbildenden thermoplastischen Polymeren mit sulfatierten Alkoholgruppen

$$-\overset{|}{\underset{|}{C}}-O-SO_3^{\ominus}$$

und/oder mit sulfonatalkylierten Alkoholgruppen

$$-\overset{|}{\underset{|}{C}}-O-(C_nH_{2n})-SO_3^{\ominus}$$

in wiederkehrenden Struktureinheiten, worin die Gruppe $-(C_nH_{2n})-$ für lineares oder verzweigtes $C_2$-$C_{12}$-Alkylen mit 2 bis 5 C-Atomen in der Kohlenstoffkette steht, das unsubstituiert oder mit $C_1$-$C_4$-Alkoxy substituiert ist, elektrochemisch polymerisiert und danach die Zusammensetzung von der Anode entfernt oder

b) ein Thiophen der Formel I in Gegenwart besagten Salzes und eines inerten Lösungsmittels mit einem Oxidationsmittel umsetzt.

Die Zusammensetzung kann je nach den Reaktionsbedingungen als Pulver oder als Film erhalten werden. Das Verfahren b) wird vorteilhaft zur Herstellung eines pulverförmigen Materials und die Verfahrensstufe a) zweckmässig zur Herstellung eines filmförmigen Materials verwendet.

Geeignete Oxidationsmittel sind z.B. Peroxide und Persulfate, besonders $H_2O_2$, $K_2S_2O_8$ und $(NH_4)_2S_2O_8$, sowie Eisen(III)-Verbindungen und Kupfer(II)-Verbindungen, besonders $FeCl_3$ und $CuCl_2$.

Die Elektrolyse kann potentiostatisch oder galvanostatisch durchgeführt werden. Als Anodenmaterial eignen sich z.B. inerte Metalle (Titan, Nickel, Platin, Stahl) oder ITO-Glas, oder auch nicht inerte Metalle wie z.B. Aluminium (siehe DE-A-3 906 563). Die Stromdichte kann z.B. 0,05-50, bevorzugt 0,05 bis 20 und besonders bevorzugt 0,05 bis 10 mA/cm$^2$ betragen. Ein geeignetes Anodenmaterial sind auch Bürstenelektroden. Es hat sich als sehr zweckmässig erwiesen, das Oxidationspotential während der Elektrolyse durch die Schaltung der Anode mit einer Referenzelektrode zu kontrollieren, da hiermit die zu erzielende elektrische Leitfähigkeit bei den erfindungsgemässen Zusammensetzungen oft günstig beeinflusst werden kann. Die Spannung der Referenzelektrode liegt hierbei vorteilhaft im Bereich von 1,1 bis 2 Volt, bevorzugt 1,3 bis 1,6 Volt.

Die Konzentration an polymeren Salzen kann 0,05 bis 1 Mol/l, bevorzugt 0,05 bis 0,5 Mol/l betragen, bezogen auf die Reaktionsmischung. Die Konzentration an Thiophenen der Formel I kann 0,01 bis 10 Vol.%, besonders 0,1 bis 5 Vol.% betragen, bezogen auf das Volumen der Reaktionsmischung.

Geeignete organische Lösungsmittel sind zuvor erwähnt worden. Bevorzugte Lösungsmittel sind Alkohole, z.B. Alkanole mit 1 bis 12 C-Atomen, die mit $C_1$-$C_4$-Alkoxy substituiert sein können. Beispiele sind Methanol, Ethanol, n- und i-Propanol, n-, i- und t-Butanol, Pentanol, Hexanol, Heptanol, Octanol, Decanol, Dodecanol, Methoxyethanol, Ethoxyethanol, Diethylenglykolmonomethyl- oder -monoethylether, 1-Methoxypropan-2-oder -3-ol. Weitere bevorzugte Lösungsmittel sind Carbonsäureester wie zum Beispiel Propylencarbonat, die besonders bei der elektrochemischen Polymerisation verwendet werden.

Die Bildung von Filmen oder von pulverförmigen Abscheidungen auf der Elektrode kann durch die Elektrolysebedingungen und besonders durch die Wahl des Lösungsmittels bestimmt werden. Die Gegenwart polarer protischer Lösungsmittel alleine oder in Mischung mit polaren Lösungsmitteln kann die Bildung von Pulvern fördern.

Die elektrochemische Polymerisation kann bei ausreichender Löslichkeit der Reaktanden auch in Wasser oder wässrig-organischer Lösung durchgeführt werden. Die Mitverwendung von Puffern ist zweckmässig. Geeignete Puffer sind z.B. Alkylammoniumphosphate mit 1 bis 3, besonders 2 oder 3 Alkylresten in der Ammoniumgruppe, die 1 bis 6, besonders 1 bis 4 C-Atome enthalten können. Beispiele sind Trimethyl-, Triethyl-,

Tri-n-propyl- und Tri-n-butylammoniumphosphat. Geeignete Puffer sind auch Kationenaustauscher in ihrer protonierten Form.

Der Reaktionsmischung können auch weitere Substanzen zugegeben werden, die sich auf der Anode mitabscheiden, z.B. anionische Weichmacher oder anionische Farbstoffe.

Nach beendeter Elektrolyse können die erfindungsgemässen Zusammensetzungen zum Beispiel in Form von Filmen von der Anode abgelöst und durch Auswaschen mit Lösungsmitteln gereinigt werden. Die Filme können eine Dicke von 0,1 μm bis 0,3 cm, bevorzugt 0,5 μm bis 0,1 cm, bevorzugter 0,5 μm bis 500 μm und besonders bevorzugt 1 μm bis 50 μm aufweisen. Die Dicke hängt im wesentlichen von der Elektrolysedauer ab.

Die Oxidation mit Eisen(III)-Verbindungen kann z.B. bei Temperaturen von -20°C bis 150°C, bevorzugt 20°C bis 100°C durchgeführt werden. Geeignete Lösungsmittel sind zuvor bei der Herstellung der polymeren Salze erwähnt worden. Sofern die Eisen(III)-Verbindungen, z.B. Eisensalze, in organischen Lösungsmitteln unlöslich sind, werden zweckmässig wasserlösliche Lösungsmittel in Abmischung mit Wasser eingesetzt. Geeignete wasserlösliche Lösungsmittel sind insbesondere $C_1$-$C_{12}$-, bevorzugt $C_1$-$C_4$-Alkanole, die mit $C_1$-$C_4$-Alkoxy substituiert sein können. Beispiele für Alkanole sind zuvor erwähnt worden.

Geeignete Eisen(III)-Verbindungen sind z.B. Eisen(III)-Komplexe oder -Komplexsalze oder besonders Eisen(III)-Salze von anorganischen und organischen Säuren, wie z.B. HCl, HBr, HJ, $H_2SO_4$, $HClO_4$, $HNO_3$, $FSO_3H$, $CF_3SO_3H$, Essigsäure und Propionsäure. Bevorzugt sind Eisen(III)-Halogenide, besonders Eisen(III)-chlorid. Neben Fe(III)-Salzen können auch andere Oxidationsmittel, wie Ammoniumperoxodisulfat und Cu(II)-Salze verwendet werden.

Bei der chemischen Oxidation werden vorteilhaft Natrium- oder Kaliumsalze sulfatierter und/oder sulfonatalkylierter thermoplastischer Polymere eingesetzt, die bevorzugt 80 bis 100 Mol-% Struktureinheiten mit sulfatierten und/oder sulfonatalkylierten Hydroxylgruppen enthalten.

Die chemische Oxidationsmethode ist z.B. im Bull. Chem. Soc. Jpn. 62, S. 234-238 (1989) beschrieben. Die Reaktion verläuft schnell und die gewünschten Produkte fallen als schwarze Pulver oder plastische Massen aus, die abfiltriert werden und durch Auswaschen mit z.B. Wasser, NaOH oder beiden Mitteln gereinigt werden können. Bei der chemischen Oxidation können die gebildeten erfindungsgemässen Zusammensetzungen Anionen der Oxidationsmittel enthalten. Sofern ionisches Chlorid enthalten ist, kann es durch Behandeln der Pulver mit Chlorsulfonsäure und nachfolgendes Waschen mit Wasser entfernt werden.Die Korngrösse der Pulverteilchen beträgt z.B. von 0,1 μm bis 100 μm, bevorzugt von 1 μm bis 10 μm.

Bei den erfindungsgemässen Zusammensetzungen handelt es sich um schwarze rieselfähige und elektrisch leitende Pulver oder Filme, mit Glasumwandlungstemperaturen bis zu etwa 200°C und mehr, die thermoplastische Eigenschaften aufweisen und aus denen nach bekannten Pressverfahren einschliesslich Spritzpressen unter Ausübung von Druck Formkörper in beliebiger dreidimensionaler Gestalt hergestellt werden können. Die Filme können auch nach Streckverfahren, zum Beispiel Tiefziehen, verarbeitet werden. Die mechanischen Eigenschaften von Filmen aus den erfindungsgemässen Zusammensetzungen können durch Verstrecken im Bereich der Glasumwandlungstemperaturen noch verbessert werden. Ein weiterer Gegenstand der Erfindung ist die Verwendung der erfindungsgemässen Zusammensetzungen zur Herstellung von elektrisch leitenden Formkörpern, z.B. von Stäben, Platten, Gehäusen und anderen Formteilen, die zur Abschirmung elektromagnetischer Felder oder als Elektroden eingesetzt werden können.

Die erfindungsgemässen Zusammensetzungen können in Form von Pulvern als Pressmassen verwendet werden. Die Pressmassen können bei niedrigen Temperaturen zu Sinterkörpern verarbeitet werden, die porös sein können. Bei Anwendung von hohem Druck und höheren Temperaturen, z.B. unterhalb der Zersetzungstemperaturen bis zum Bereich der Glasumwandlungstemperaturen, bevorzugt 60°C bis 150°C, sind die Pressmassen überraschend fliessfähig. Unter solchen Verarbeitungsbedingungen erhält man kompakte Formkörper mit glatten Oberflächen und guten mechanischen Eigenschaften, z.B. Biegefestigkeit, Bruchfestigkeit, Zugfestigkeit, Flexibilität und Zähigkeit.

Die Formkörper aus den erfindungsgemässen Zusammensetzungen weisen hohe elektrische Leitfähigkeiten auf, die im allgemeinen über 0,1 S/cm liegen. Die Leitfähigkeit kann durch Tempern von Formkörpern oder durch den Druck und/oder die Temperatur bei Formgebungsverfahren oder durch Verstreckung von Filmen beeinflusst werden. Das Verstrecken kann überraschend sogar bei Temperaturen im Bereich der Raumtemperatur durchgeführt werden. Beim Verstrecken von Filmen im Bereich zwischen Raumtemperatur und Glasumwandlungstemperatur wird die elektrische Leitfähigkeit überraschend wesentlich erhöht. Diese erfindungsgemässen Zusammensetzungen weisen ferner wertvolle mechanische Eigenschaften auf.

Die Formkörper und Filme aus erfindungsgemässen Zusammensetzungen können z.B. als elektrische Leiter, Elektroden, Kathoden für Batterien, elektromagnetische Abschirmungsmaterialien, elektrisch leitende Stäbe, Sensoren, antistatisches Verpackungsmaterial, elektrisch leitendes Versiegelungsmaterial, Ladungsträger für Kondensatoren, als elektrochrome Materialien oder IR-Absorber verwendet werden.

Die pulverförmigen Zusammensetzungen können auch als elektrisch leitende Füllstoffe in Polymere eingearbeitet werden, z.B. in Mengen von 0,1 bis 90, vorzugsweise 5 bis 80 Gew.-%, bezogen auf den Kunststoff. Geeignete Kunststoffe, z.B. aus dem Bereich der Duroplaste, Thermoplaste und strukturell vernetzter Polymere sowie Einarbeitungsmethoden und die Verwendung von z.B. Verarbeitungshilfsmitteln, anderen Füllstoffen, Farbstoffen und Stabilisatoren sind dem Fachmann geläufig. Formkörper aus diesen gefüllten Kunststoffen können je nach Menge des elektrisch leitenden Füllstoffs z.B. als elektrische Leiter oder als Bauteile zur Abschirmung elektrischer und magnetischer Felder verwendet werden. Ein weiterer Gegenstand der Erfindung ist die Verwendung der erfindungsgemässen pulverförmigen Zusammensetzung als Füllstoff für natürliche und synthetische Kunststoffe.

Ein anderer Gegenstand der Erfindung ist eine Zusammensetzung aus

a) einem thermoplastischen, duroplastischen oder strukturell vernetzten Polymer, dem

b) ein elektrisch leitender feinteiliger Füllstoff aus einer pulverförmigen erfindungsgemässen Zusammensetzung einverleibt ist.

Die Menge der Komponente b) kann 0,1 bis 90 Gew.-%, bevorzugt 5 bis 80 Gew.-% betragen, bezogen auf die Komponente a). Bei einer Menge bis zu etwa 20 Gew.-% werden elektrische Leitfähigkeiten erzielt, die z.B. für eine antistatische Ausrüstung und die Abschirmung von elektrischen Feldern geeignet sind. Hohe elektrische Leitfähigkeiten und z.B. als elektrische Leiter geeignete Formkörper werden bei Zusatzmengen von über 20 Gew.-%, bevorzugt mindestens 30 Gew.-% erhalten.

Als Kunststoffe eignen sich z.B.:

1. Polymere von Mono- und Diolefinen, beispielsweise Polypropylen, Polyisobutylen, Polybuten-1, Polymethylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.

3a. Kohlenwasserstoffharze (z.B. $C_5$-$C_9$) inklusive hydrierte Modifikationen davon (z.B. Klebrigmacherharze).

4. Polystyrol, Poly-(p-methylstyrol), Poly-($\alpha$-methylstyrol).

5. Copolymere von Styrol oder $\alpha$-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol oder $\alpha$-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.

7. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymere, die sich von α,β-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

13. Polyphenylenoxide und -sulfide und deren Mischungen mit Styrolpolymeren oder Polyamiden.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylylendiamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Polym-phenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamid-systeme").

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten, wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

27. Mischungen (Polyblends) der vorgenannten Polymere, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

Der erfindungsgemässen Zusammensetzung können weitere Additive zur Verbesserung der Verarbeitungseigenschaften, der mechanischen, elektrischen und thermischen Eigenschaften, der Oberflächeneigenschaften und der Lichtstabilität einverleibt sein, zum Beispiel feinteilige Füllstoffe, Verstärkerfüllstoffe, Weichmacher, Gleit- und Entformungsmittel, Haftvermittler, Antioxidantien, Wärme- und Lichtstabilisatoren, Pigmente und Farbstoffe.

Die Herstellung dieser erfindungsgemässen Zusammensetzung kann nach in der Kunststofftechnik bekannten Verfahren erfolgen, zum Beispiel durch Vermischen des feinteiligen elektrisch leitenden Füllstoffs mit dem Kunststoff vor, während oder nach der Herstellung, durch Plastifizieren des Kunststoffs und Vermischen mit dem Füllstoff mittels Kalandrieren, Kneten, Extrudieren oder Spritzgiesen zur Herstellung von Granulaten oder Formkörpern. Es ist auch möglich, Kunststoffpulver mit dem Füllstoff trocken zu vermischen und dann zu formen, oder den Füllstoff in einer Kunststofflösung zu suspendieren, dann das Lösungsmittel zu entfernen und anschliessend zu verarbeiten.

Bei Duroplasten und strukturell vernetzten Polymeren wird der feinteilige Füllstoff zweckmässig vor der Formgebung und vor dem Härten bzw. Vernetzen zugesetzt, zum Beispiel durch gemeinsames Vermischen der Kunststoffkomponenten mit dem Füllstoff, wobei dieser zuvor einer Komponente einverleibt werden kann.

Diese erfindungsgemässe Zusammensetzung ist eine wertvolle Formmasse zur Herstellung antistatisch ausgerüsteter und elektrisch leitender Formteile aller Art, zum Beispiel von Filmen, Folien, Bändern, Fasern, Platten, Halbzeug, Formkörpern und Gehäusen für Verwendungszwecke, wie sie zuvor erwähnt wurden. Hierbei können die für die Kunststoffverarbeitung üblichen Verfahren angewendet werden, zum Beispiel Kalandrieren, Spritzgiessen, Spritzpressen, Extrudieren, Tiefziehen, Press- und Sinterverfahren.

Der feinteilige elektrisch leitende Füllstoff ist thermoplastisch verformbar, besonders bei einer Verarbeitung unter Druck und erhöhter Temperatur. Solche Verarbeitungsverfahren sind daher bevorzugt, da hiermit im allgemeinen eine höhere elektrische Leitfähigkeit erzielt werden kann. Die Verträglichkeit mit den Basispolymeren kann über die Wahl des sulfatierten beziehungsweise sulfonatalkylierten Polyanions beeinflusst werden. Polyanionen mit funktionellen Gruppen, z.B. Hydroxylgruppen, können zu Vernetzungen mit entsprechenden Basispolymeren (z.B. Epoxidharze) führen. Die Formteile weisen bei guten mechanischen Eigenschaften hohe und dauerhafte elektrische Leitfähigkeiten auf, die im allgemeinen mindestens 0,01 S/cm betragen. Die Leitfähigkeit kann durch Nachtempern der Formteile erhöht werden.

Ein weiterer Gegenstand der Erfindung ist die Verwendung dieser erfindungsgemässen Zusammensetzung zur Herstellung von elektrisch leitenden Formteilen.

Die nachfolgenden Beispiele erläutern die Erfindung näher. Die Leitfähigkeit wird nach der Vierpunktmethode gemessen. Die Zugfestigkeit wird nach DIN 53455 und die Glasumwandlungstemperatur ($T_g$) nach der Differential-Scanning-Calometrie. Prozentangaben sind Gewichtsprozente, wenn nicht anders vermerkt. Die sulfatierten thermoplastischen Polymere werden nach den in der US-A-5 061 401 beschriebenen Verfahren hergestellt.

Beispiel 1: Galvanostatisch kontrollierte Polymerisation

2 g (3,6mmol) Tri-n-Butylammoniumsalz eines zu 30 Mol.-% teilsulfatierten Poly-(β-hydroxyethers), hergestellt durch Polyaddition von Bisphenol-A-diglycidylether und Bisphenol-A, mit einem mittleren Molekulargewicht von 28000 Dalton und 0,2 ml (0,75 Vol-%) 3,4-Ethylendioxy-thiophen (EDT) werden in 30 ml Propylencarbonat bei Raumtemperatur gelöst und in eine mit Inertgas gefüllte Elektrolysezelle übergeführt. Diese ist mit Elektroden aus Edelstahl ausgestattet (Fläche 5 $cm^2$). Um eine homogene Durchmischung der Elektrolytlösung zu gewährleisten wird eine rotierende Anode verwendet; die Kathode wird in Netzform eingesetzt um eine Abführung gasförmiger Nebenprodukte zu gewährleisten. Zur Kontrolle des Oxidationspotentials der Elektropolymerisation wird eine Ag/AgCl-Referenzelektrode zur Anode geschaltet. Die abgeschiedenen Filme werden mechanisch von der Anode abgetrennt, in Acetonitril 1 h unter Rückfluss extrahiert und bei 50°C im Hochvakuum getrocknet. Die Reaktionsbedingungen und die elektrischen Leitfähigkeiten bei verschiedenen Stromdichten, Elektrodenpotentialen ($E_{pot}$W/CE), Referenzpotentialen ($E_{pot}$W/Ref) und Elektrolysezeiten sind in Tabelle 1 zusammengefasst:

TABELLE 1:

| Stromdichte (mA/$cm^2$) | $E_{pot}$W/CE (V) | $E_{pot}$W/Ref (V) | t(h) | σ(S/cm) |
|---|---|---|---|---|
| 0,1 | 3,1 | 1,5-1,6 | 2,5 | 70 |
| 0,2 | 3,14 | 1,2 | 1,5 | 27 |
| 0,06 | 2,85 | 1,01 | 16 | 6 |

Beispiel 2:

0,05 mol/l eines sulfatierten Phenoxyharzes (25 Mol-% Sulfatierungsgrad) und 6,8 g (5 ml) 3,4-Propylidendioxythiophen werden in 200 ml Propylencarbonat und 2 ml Wasser gelöst und in eine mit Inertgas gefüllte Elektrolysezelle übergeführt. Diese ist mit Elektroden aus Edelstahl ausgestattet. Beim Durchleiten einer Ladung von 3,6 $C/cm^2$ wird ein Film von 70 µm Dicke an der Anode abgeschieden, gemäss Beispiel 1 gereinigt und getrocknet. Die Leitfähigkeit des Films beträgt 104 S/cm.

Beispiel 3:

Eine Lösung von 6 g (0,05 mol/l) eines sulfatierten Phenoxyharzes (25 Mol-% Sulfatierungsgrad) und 0,48 mol/l 3,4-Ethylendioxythiophen (EDT) in 100 ml Propylencarbonatund 1 ml Wasser wird in eine mit Inertgas gefüllte Elektrolysezelle übergeführt. Diese ist mit Elektroden aus Edelstahl ausgestattet. Beim Durchleiten einer Ladung von 7,2 $C/cm^2$ wird ein Film von 110 µm Dicke an der Anode abgeschieden, gemäss Beispiel 1 gereinigt und getrocknet. Die Leitfähigkeit des Films beträgt 200 S/cm.

Beispiel 4:

Gleiche Bedingungen wie in Beispiel 3, jedoch unter Verwendung von γ-butyrolacton als Lösungsmittel. Die Leitfähigkeit des Films beträgt 280 S/cm.

Beispiel 5:

Eine Lösung von 0,05 mol/l eines sulfatierten Phenoxyharzes bestehend aus 2,2-Bis(4-hydroxyphenyl)hexaflouropropan-Struktureinheiten (23 Mol-% Sulfatierungsgrad) und 6 g 3,4-Ethylendioxythiophen (EDT) in 100 ml Propylencarbonat und 1 ml Wasser wird in eine mit Inertgas gefüllte Elektrolysezelle übergeführt. Diese ist mit Elektroden aus Edelstahl ausgestattet. Beim Durchleiten einer Ladung von 7,2 $C/cm^2$ wird ein Film von 110 µm Dicke an der Anode abgeschieden, gemäss Beispiel 1 gereinigt und getrocknet. Die Leitfähigkeit des Films beträgt 350 S/cm.

Beispiel 6: Potentiostatisch kontrollierte Polymerisation.

0,35 g Tri-n-Butylammoniumsalz eines zu 81 Mol-% teilsulfatierten Poly(β-hydroxyethers) aus Bisphenol-A-diglycidylether und Bisphenol-A mit einem mittleren Molekulargewicht von 28000 Dalton und 0,2 ml Ethylendioxy-thiophen (EDT) werden bei Raum-temperatur in 30 ml Propylencarbonat gelöst. Die Reaktionsmischung wird unter Inertgasatmosphäre in eine Elektrolysezelle gemäss Beispiel 1 gegeben. Man steuert die anodische Polymerisation des EDT's unter potentiostatischer Reaktionskontrolle, indem man ein Potential von 1.5 V gegen eine Ag/AgCl-Referenzelektrode zur rotierenden Anode anlegt. Die Stromdichte beträgt 1.2 $mA/cm^2$, die Spannung zwischen Arbeits- und Gegenelektrode beträgt maximal 9 V. Nach t = 35 min wird ein Film von 36 µm Dicke abgeschieden, gemäss Beispiel 1 gereinigt und getrocknet. Die Leitfähigkeit des Films beträgt 115 S/cm.

Beispiel 7: Potentiostatisch kontrollierte Polymerisation.

0,5 g Tri-n-Butylammoniumsalz eines zu 33 Mol-% hydroxylierten und dann teilsulfatierten hydroxylierten cis-Polybutadiens ($M_w$ 300 000, hergestellt nach Beispiel A7 der US-A-5 061 401) und 0,2 ml (0,75 Vol.-%) EDT werden bei Raumtemperatur in 30 ml Propylencarbonat gelöst. Gemäss Beispiel 2 wird dann unter folgenden Bedingungen ein Film hergestellt: $E_{Pot}$(W/Ref)= 1,5 V, Stromdichte 1,6 $mA/cm^2$, $E_{Pot}$(W/CE)= 7 V, t = 50 min. Der 57 µm dicke Film besitzt eine Leitfähigkeit von 130 S/cm.

Beispiel 8: Potentiostatisch kontrollierte Polymerisation.

0,3 g Tri-n-Butylammoniumsalz eines zu 77 Mol-% teilsulfatierten Polyvinylalkohols und 0,2 ml (0,75 Vol.-%) EDT werden in 30 ml Propylencarbonat bei Raumtemperatur gelöst und wie in Beispiel 2 beschrieben elektrolysiert: $Ep_{ot}$(W/Ref)=1,5 V, Stromdichte 2 $mA/cm^2$, $E_{Pot}$(W/CE)= 8,5 V, t=40 min. Der 30 µm dicke Film besitzt eine Leitfähigkeit von 60 S/cm.

Beispiel 9:

Ein Lösung von 17,4 g Tri-n-Butylammoniumsalz eines zu 88 Mol-% teilsulfatierten Copolymeres aus p-Vinylphenol und Styrol(1:0,79, mittleres Molekulargewicht 3600) und 10 ml 3,4-Ethylendioxythiophen in 180 ml Propylencarbonat, 20 ml Methoxyethanol und 2 ml Wasser wird mit Argon gespült und dann in eine Elektrolysezelle transferriert. Bei einer Stromdichte von 2,0 $mA/cm^2$ wird nach einer Stunde ein etwa 140 µm dicker Film auf der Anode abgeschieden. Der Film wird mechanisch entfernt, mit Ethanol gewaschen und dann bei 50°C im Vakuum getrocknet. Der schwarze Film weist eine Leitfähigkeit von 51,4 S/cm, eine Zugfestigkeit von 68 MPa, eine Bruchdehnung von 12% bei Raumtemperatur und 128% bei 100°C auf.

Beispiel 10: Mechanische und thermoplastische Eigenschaften

Die mechanische Verstreckbarkeit einiger gemäss Beispiel 2 hergestellter Filme aus EDT und teilsulfatierten Poly(β-hydroxyether) aus Bisphenol-A-diglycidylether und Bisphenol-A mit einem mittleren Molekulargewicht von 28 000 in Abhängigkeit vom Sulfatierungsgrades φ (=n/n+m) des Poly(β-hydroxyethers) wird mit Hilfe eines Miniatur-Material-Testers (Polymer Laboratories) bestimmt. Der Elastizitätsmodulus der Filme variiert in Abhängigkeit des Sulfatierungsgrades φ zwischen 0.3 und 0.9 GPa. Die Leitfähigkeiten der verstreckten Filme werden in Verstreckungsrichtung nach der 4-Punktmethode bestimmt. Die Ergebnisse sind in Tabelle 2 angegeben:

TABELLE 2: Verstrecken ($\Delta l/l_o$) von Filmen bei Raumtemperatur und 100°C, Abhängigkeit vom Sulfatierungsgrad φ des Polyanions

| φ (n/n+m) | $\sigma^o$ (S/cm) | $\Delta l/l_o$ bei RT in (%) | $\sigma^1$ (S/cm) | $\Delta l/l_o$ bei 100°C in (%) | $\sigma^2$ (S/cm) |
|---|---|---|---|---|---|
| 1 | 100 | 14,5 | 135 | 11 | 126 |
| 0,81 | 115 | 27 | 145 | 41 | 137 |
| 0,72 | 97 | 39 | 120 | 99 | 225 |
| 0,63 | 57 | 55 | 145 | 88 | 212 |
| 0,305 | 36 | 60 | 67 | 85 | 72 |
| 0,235 | 30 | 120 | 30 | 100 | 62 |

$\sigma^0$ Leitfähigkeit des unverstreckten Films
$\sigma^1$ Leitfähigkeit des bei Raumtemperatur verstreckten Films
$\sigma^2$ Leitfähigkeit des bei 100 °C verstreckten Films

Beispiel 11: Chemische Polymerisation von EDT.

1 g (2,6 mmol) Natriumsalz eines zu 100 % sulfatierten Poly(β-hydroxyethers) aus Bisphenol-A-diglycidylether und Bisphenol-A mit einem mittleren Molekulargewicht von 28 000 Dalton wird in 30 ml Lösungsmittel gelöst. Nach Zugabe von 1,14 g (8,07 mmol) EDT werden bei 100 °C (Beispiel H in Tabelle 3) 3,06 g $FeCl_3$ in 5 ml $H_2O$ zugetropft. Die Lösung verfärbt sich nach kurzer Zeit schwarz. Das ausgefallene Pulver wird abfiltriert, mehrfach in $H_2O$ gewaschen und im Vakuum getrocknet. Weitere Angaben finden sich in Tabelle 3. Die Leitfähigkeit wird an einer gepressten Pille nach der 4-Punktmethode bestimmt. Die Zusammensetzungen der Beispiele A bis G in Tabelle 3 werden in analoger Weise erhalten.

TABELLE 3: Chemische Polymerisation von EDT

| | Oxidationsmittel | Lösungsmittel | T(°C) | t | Morphologie | σ(S/cm) |
|---|---|---|---|---|---|---|
| A | $(NH_4)_2S_2O_8$ | Methoxyethnol/$H_2O$ (1:1) | 10 | 3 ***d*** | Pulver | 0,11 |
| B | " | Benzonitril | 150 | 5 h | " | 0,01 |
| C | " | Wie A | 100 | 5 h | plastische Masse | $8{\cdot}10^{-8}$ |
| D | $FeCl_3$ | Methoxyethanol | 10 | 1 ***d*** | Pulver | $2 \cdot 10^{-9}$ |
| E | " | " | 10 | 3 ***d*** | " | $3{\cdot}10^{-6}$ |
| F | " | Wie A | 10 | 2 ***d*** | Pulver | $3{\cdot}10^{-4}$ |
| G | " | Wie A | 100 | 5 h | plastische Masse | 0,13 |
| H | " | Methoxyethnol/$H_2O$ (1:6) | " | " | Pulver | 1,82 |

**Patentansprüche**

**1.** Zusammensetzung aus

a) mindestens einem Polythiophen in oxidierter, polykationischer Form und wiederkehrenden Struktureinheiten der Formel I

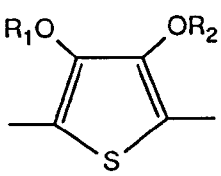

(I),

worin $R_1$ und $R_2$ unabhängig voneinander für lineares oder verzweigtes $C_1$-$C_{18}$-Alkyl oder $C_2$-$C_{18}$-Alkoxyalkyl stehen; oder $C_3$-$C_8$-Cycloalkyl, Phenyl oder Benzyl bedeuten, die unsubstituiert oder mit $C_1$-$C_6$-Alkyl, $C_1$-$C_6$-Alkoxy oder Halogen substituiert sind; oder $R_1$ und $R_2$ zusammen lineares $C_1$-$C_6$-Alkylen darstellen, das unsubstituiert oder mit $C_1$-$C_6$-Alkyl, $C_1$-$C_6$-Alkoxy, Halogen, $C_3$-$C_8$-Cycloalkyl, Phenyl, Benzyl, $C_1$-$C_4$-Alkylphenyl, $C_1$-$C_4$-Alkoxyphenyl, Halogenphenyl, $C_1$-$C_4$-Alkylbenzyl, $C_1$-$C_4$-Alkoxybenzyl oder Halogenbenzyl substituiert ist; und

b) mindestens einem Polyanion eines filmbildenden thermoplastischen Polymeren mit sulfatierten Alkoholgruppen

$$-\overset{|}{\underset{|}{C}}-O-SO_3^{\ominus}$$

und/oder mit sulfonatalkylierten Alkoholgruppen

$$-\overset{|}{\underset{|}{C}}-O-(C_nH_{2n})-SO_3^{\ominus}$$

in wiederkehrenden Struktureinheiten, worin die Gruppe $-(C_nH_{2n})-$ für lineares oder verzweigtes $C_2$-$C_{12}$-Alkylen mit 2 bis 5 C-Atomen in der Kohlenstoffkette steht, das unsubstituiert oder mit $C_1$-$C_4$-Alkoxy substituiert ist.

**2.** Zusammensetzung gemäss Anspruch 1, dadurch gekennzeichnet, dass $R_1$ und $R_2$ als Alkyl $C_1$-$C_{12}$-Alkyl

darstellen.

3. Zusammensetzung gemäss Anspruch 2, dadurch gekennzeichnet, dass $R_1$ und $R_2$ $C_1$-$C_8$-Alkyl darstellen.

4. Zusammensetzung gemäss Anspruch 2, dadurch gekennzeichnet, dass $R_1$ und $R_2$ $C_1$-$C_4$-Alkyl darstellen.

5. Zusammensetzung gemäss Anspruch 1, dadurch gekennzeichnet, dass $R_1$ und $R_2$ als Alkoxyalkyl $C_1$-$C_{17}$-Alkoxymethyl und $C_1$-$C_{16}$-Alkoxyethyl darstellen.

6. Zusammensetzung gemäss Anspruch 5, dadurch gekennzeichnet, dass $R_1$ und $R_2$ $C_1$-$C_{12}$-Alkoxymethyl und $C_1$-$C_{12}$-Alkoxyethyl darstellen.

7. Zusammensetzung gemäss Anspruch 6, dadurch gekennzeichnet, dass $R_1$ und $R_2$ $C_1$-$C_8$-Alkoxymethyl und $C_1$-$C_7$-Alkoxyethyl darstellen.

8. Zusammensetzung gemäss Anspruch 6, dadurch gekennzeichnet, dass $R_1$ und $R_2$ $C_1$-$C_4$-Alkoxymethyl und $C_1$-$C_4$-Alkoxyethyl darstellen.

9. Zusammensetzung gemäss Anspruch 1, dadurch gekennzeichnet, dass $R_1$ und $R_2$ als Cycloalkyl $C_5$- oder $C_6$-Cycloalkyl bedeuten.

10. Zusammensetzung gemäss Anspruch 1, dadurch gekennzeichnet, dass es sich bei den Substituenten für Cycloalkyl, Phenyl und Benzyl um $C_1$-$C_4$-Alkyl, $C_1$-$C_4$-Alkoxy, F, Cl und Br handelt.

11. Zusammensetzung gemäss Anspruch 1, dadurch gekennzeichnet, dass $R_1$ und $R_2$ zusammen als Alkylen $C_1$-$C_4$-Alkylen bedeuten.

12. Zusammensetzung gemäss Anspruch 11, dadurch gekennzeichnet, dass $R_1$ und $R_2$ $C_1$- oder $C_2$-Alkylen bedeutet.

13. Zusammensetzung gemäss Anspruch 11, dadurch gekennzeichnet, dass $R_1$ und $R_2$ als Alkylen Methylen, Ethylen, Propylen, Butylen, Pentylen und Hexylen sind.

14. Zusammensetzung gemäss Anspruch 1, dadurch gekennzeichnet, dass Substituenten für $R_1$ und $R_2$ als Alkylen $C_1$-$C_6$-Alkyl, $C_1$-$C_6$-Alkoxy, Cyclohexyl, Phenyl und Benzyl sind.

15. Zusammensetzung gemäss Anspruch 1, dadurch gekennzeichnet, dass $R_1$ und $R_2$ lineares oder verzweigtes $C_1$-$C_6$-Alkyl oder $R_1$ und $R_2$ zusammen $C_1$-$C_4$-Alkylen bedeuten, das unsubstituiert oder mit 1 oder 2 $C_1$-$C_6$-Alkylgruppen oder $C_1$-$C_6$-Alkoxygruppen substituiert ist.

16. Zusammensetzung gemäss Anspruch 15, dadurch gekennzeichnet, dass $R_1$ und $R_2$ lineares oder verzweigtes $C_1$-$C_4$-Alkyl oder $R_1$ und $R_2$ zusammen $C_1$- oder $C_2$-Alkylen bedeuten.

17. Zusammensetzung gemäss Anspruch 16, dadurch gekennzeichnet, dass $R_1$ und $R_2$ $C_1$- oder $C_2$-Alkylen darstellen, das unsubstituiert oder mit $C_1$-$C_6$-Alkyl oder $C_1$-$C_6$-Alkoxy substituiert ist.

18. Zusammensetzung gemäss Anspruch 17, dadurch gekennzeichnet, dass $R_1$ und $R_2$ einen Rest der Formel $-CHR_a-CHR_b-$ darstellen, worin $R_a$ und $R_b$ unabhängig voneinander für H oder $C_1$-$C_6$-Alkyl stehen.

19. Zusammensetzung gemäss Anspruch 18, dadurch gekennzeichnet, dass $R_1$ und $R_2$ für H, Methyl oder Ethyl, stehen.

20. Zusammensetzung gemäss Anspruch 18, dadurch gekennzeichnet, dass die Struktureinheit der Formel I einem Rest der Formel

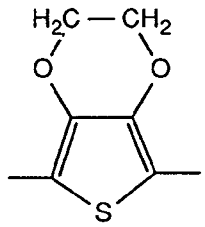

entspricht.

**21.** Zusammensetzung gemäss Anspruch 1, dadurch gekennzeichnet, dass sie pro Struktureinheit des Polythiophens 0,1 bis 0,9 Struktureinheiten mit sulfatierten Alkoholgruppen

$$-\overset{|}{\underset{|}{C}}-OSO_3^{\ominus}$$

und/oder sulfonatalkylierten Alkoholgruppen

$$-\overset{|}{\underset{|}{C}}-O-(C_nH_{2n})-SO_3^{\ominus}$$

enthält.

**22.** Zusammensetzung gemäss Anspruch 21, dadurch gekennzeichnet, dass sie 0,1 bis 0,6 Struktureinheiten enthält.

**23.** Zusammensetzung gemäss Anspruch 1, dadurch gekennzeichnet, dass die Gruppe -$(C_nH_{2n})$ lineares oder verzweigtes $C_3$-$C_8$-Alkylen mit 3 bis 5 C-Atomen in der Kohlenstoffkette darstellt.

**24.** Zusammensetzung gemäss Anspruch 23, dadurch gekennzeichnet, dass die Gruppe -$(C_nH_{2n})$- lineares $C_3$-$C_5$-Alkylen darstellt.

**25.** Zusammensetzung gemäss Anspruch 24, dadurch gekennzeichnet, dass es sich bei der Gruppe -$(C_nH_{2n})$- um Trimethylen oder Tetramethylen handelt.

**26.** Zusammensetzung gemäss Anspruch 1, dadurch gekennzeichnet, dass das thermoplastische Polymer mit versalzten sulfatierten Alkoholgruppen

$$-\overset{|}{\underset{|}{C}}-OSO_3^{\ominus}M^{\oplus}$$

und/oder versalzten sulfonatalkylierten Alkoholgruppen

$$-\overset{|}{\underset{|}{C}}-O(C_nH_{2n})SO_3^{\ominus}M^{\oplus}$$

eine Glasumwandlungstemperatur von -100 bis 350°C aufweist, gemessen nach der DSC-Methode, wobei $M^{\oplus}$ ein Alkalimetall- oder ein Ammoniumkation ist.

**27.** Zusammensetzung gemäss Anspruch 1, dadurch gekennzeichnet, dass der Polymerisationsgrad des thermoplastischen Polymeren 5 bis 10000 beträgt.

**28.** Zusammensetzung gemäss Anspruch 1, dadurch gekennzeichnet, dass die Alkoholgruppen im thermoplastischen Polymer vollständig sulfatiert und/oder sulfonatalkyliert sind.

**29.** Zusammensetzung gemäss Anspruch 1, dadurch gekennzeichnet, dass das Verhältnis von freien Alkoholgruppen zu sulfatierten Alkoholgruppen

$$-\overset{|}{\underset{|}{C}}-OSO_3^{\ominus}$$

und/oder sulfonatalkylierten Alkoholgruppen

$$-\overset{|}{\underset{|}{C}}-O-(C_nH_{2n})-SO_3^{\ominus};$$

im thermoplastischen Polymer von 50:1 bis 1:50 beträgt.

**30.** Zusammensetzung gemäss Anspruch 1, dadurch gekennzeichnet, dass das thermoplastische Polymer 5 bis 100 Mol-% sulfatierte Alkoholgruppen

$$-\overset{|}{\underset{|}{C}}-OSO_3^{\ominus}$$

und/oder sulfonatalkylierte Alkoholgruppen

$$-\overset{|}{\underset{|}{C}}-O-(C_nH_{2n})-SO_3^{\ominus}$$

enthält, wobei die restlichen Struktureinheiten entsprechende hydroxylgruppenhaltige oder hydroxylgruppenfreie Strukturelemente sind.

**31.** Zusammensetzung gemäss Anspruch 1, dadurch gekennzeichnet, dass die sulfatierten und/oder sulfonatalkylierten Alkoholgruppen als sekundäre Gruppen

$$>CH-O-SO_3^{\ominus}$$

oder

$$>CH-O-(C_nH_{2n})SO_3^{\ominus}$$

oder als tertiäre Gruppen

$$-\!\!>C-O-SO_3^{\oplus} \text{ oder } -\!\!>C-O-(C_nH_{2n})SO_3^{\ominus}$$

im Polymerrückgrat; oder in Seitengruppen des Polymeren als primäre Gruppen $-CH_2-O-SO_3^{\ominus}$ oder $-CH_2-O-(C_nH_{2n})SO_3^{\ominus}$ endständig, oder als sekundäre Gruppen

$$>CH-O-SO_3^{\ominus} \text{ oder } >CH-O-(C_nH_{2n})SO_3^{\ominus}$$

oder als tertiäre Gruppen

$$-\!\!>C-O-SO_3^{\oplus}$$

oder

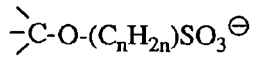

mittelständig gebunden sind.

**32.** Zusammensetzung gemäss Anspruch 1, dadurch gekennzeichnet, dass den thermoplastischen Polymeren Hydroxylgruppen enthaltende Polymere oder Mischungen davon aus der Gruppe Polyester, Polyesteramide, Polyurethane, Polyamide, Polycarbonate und Polyimide aus Hydroxylgruppen enthaltenden Monomeren; verseifte Polymerisate von Vinylestern oder -ethern; hydroxylierte Polydiolefine sowie deren Copolymere mit olefinischen Monomeren; Polyacrylate oder Polymethacrylate mit Hydroxyalkylresten in der Estergruppe; Polysiloxane mit Hydroxyalkylgruppen; reduzierte Polyketone oder Copolymere davon; Polyether aus Glycidylverbindungen und Diolen; Polyvinylphenole oder Copolymere von Vinylphenolen und olefinischen Comonomeren; sowie Copolymerisate von Vinylalkohol, oder Hydroxylalkyl enthaltenden Acrylaten oder Methacrylaten, oder hydroxylierten Diolefinen mit ethylenisch ungesättigten Comonomeren zu Grunde liegen.

**33.** Zusammensetzung gemäss Anspruch 32, dadurch gekennzeichnet, dass es sich bei den sulfatierten und/oder sulfonatalkylierten thermoplastischen Polymeren um Polymere aus der Gruppe Polyaddukte aus Glycidylverbindungen mit durchschnittlich mehr als einer Epoxidgruppe und einem Diol; Homo- und Copolymere von Hydroxyalkylacrylaten beziehungsweise -methacrylaten; Homo- und Copolymere von Vinylalkohol; Homo- und Copolymere von Butadien, Isopren und Chloropren, deren Doppelbindungen teilweise oder ganz hydroxyliert sind; Homo- und Copolymere von Vinylphenolen; Polyimide aus hydrierten Ketotetracarbonsäuren; Hydroxyalkylpolysiloxane; und Polyester, Polyamide, Polyurethane und Polyimide aus $C_4$-$C_{12}$-Alkenylendiolen beziehungsweise -diaminen, deren Doppelbindung hydroxyliert sind, handelt.

**34.** Zusammensetzung gemäss Anspruch 32, dadurch gekennzeichnet, dass die thermoplastischen Polymere entweder sulfatiert oder sulfonatalkyliert sind.

**35.** Zusammensetzung gemäss Anspruch 1, dadurch gekennzeichnet, dass es sich bei dem thermoplastischen Polymer um ein mindestens teilweise sulfatiertes und/oder sulfonatalkyliertes Polyaddukt aus a) einer Glycidylverbindung mit durchschnittlich mehr als einer Epoxidgruppe und b) einem Diol handelt, das Gruppen

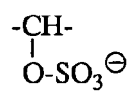

und/oder

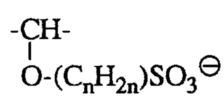

in der Polymerkette enthält, worin die Gruppe $-C_nH_{2n}-$ die in Anspruch 1 angegebenen Bedeutungen hat.

**36.** Zusammensetzung gemäss Anspruch 35, dadurch gekennzeichnet, dass das Polyaddukt

a) 100 bis 5 Mol-% gleiche oder verschiedene Struktureinheiten der Formel II und/oder IIa

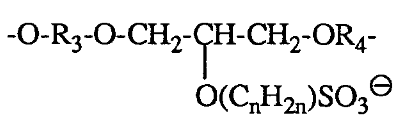 (II),

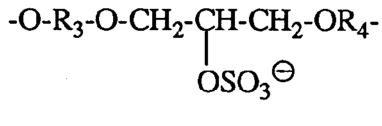

(IIa),

und

b) 95 bis 0 Mol-% gleiche oder verschiedene Struktureinheiten der Formel III

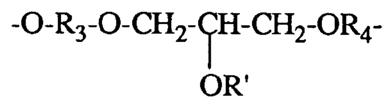

(III),

enthält, bezogen auf das Polyaddukt, wobei $R_3$ und $R_4$ unabhängig voneinander den um zwei Hydroxylgruppen verminderten Rest eines Diols mit aliphatischen oder aromatischen Diolgruppen darstellen, und R' H, $C_1$-$C_{20}$-Alkyl, $C_1$-$C_{20}$-Acyl oder mit einem $C_1$-$C_{20}$-Kohlenwasserstoffrest N-substituiertes Aminocarbonyl bedeutet.

**37.** Zusammensetzung gemäss Anspruch 36, dadurch gekennzeichnet, dass R' in Formel III für H steht.

**38.** Zusammensetzung gemäss Anspruch 36, dadurch gekennzeichnet, dass $R_3$ und $R_4$ gleiche Reste darstellen.

**39.** Zusammensetzung gemäss Anspruch 36, dadurch gekennzeichnet, dass $R_3$ und $R_4$ in der Bedeutung als Rest mit aliphatischen Diolgruppen lineares oder verzweigtes $C_2$-$C_{12}$-Alkylen, $C_3$-$C_8$-Cycloalkylen, $C_1$-$C_4$-Alkyl-$C_5$-$C_8$-cycloalkylen, Cyclohexylmethylen oder Cyclohexyldimethylen darstellt.

**40.** Zusammensetzung gemäss Anspruch 36, dadurch gekennzeichnet, dass $R_3$ und $R_4$ unabhängig voneinander einen Rest der Formel IV

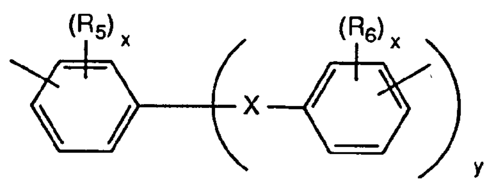

(IV)

darstellen, worin X eine direkten Bindung, $C_1$-$C_4$-Alkylen, $C_2$-$C_{12}$-Alkyliden, $C_5$-$C_8$-Cycloalkyliden, -O-, -S-, -SO-, $-SO_2-$, -CO-, $-CO_2-$, -N($C_1$-$C_4$-Alkyl)- oder $-Si(CH_3)_2-$ bedeutet, $R_5$ und $R_5$ unabhängig voneinander H, Halogen, $C_1$-$C_4$-Alkyl oder $C_1$-$C_4$-Alkoxy sind, und x 1 oder 2 bedeutet und y für 0 oder 1 steht.

**41.** Zusammensetzung gemäss Anspruch 40, dadurch gekennzeichnet, dass X eine direkte Bindung, Methylen, Ethylen, $C_2$-$C_6$-Alkyliden, Cyclohexyliden oder Cyclopentyliden, -O- oder -S- darstellen.

**42.** Zusammensetzung gemäss Anspruch 40, dadurch gekennzeichnet, dass $R_5$ und $R_5$ für H oder Methyl und y für 1 stehen.

**43.** Zusammensetzung gemäss Anspruch 36, dadurch gekennzeichnet, dass $R_3$ und $R_4$ den Rest

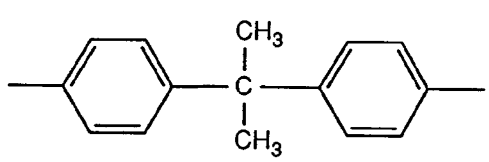

darstellen.

**44.** Zusammensetzung gemäss Anspruch 1, dadurch gekennzeichnet, dass das thermoplastische Polymer

ein mindestens teilweise sulfatierter und/oder sulfonatalkylierter Polyvinylalkohol oder sulfatiertes und/oder sulfonatalkyliertes Polyvinylalkohol-Copolymer mit Gruppen

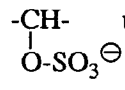 und/oder 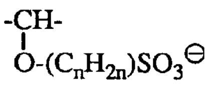

ist.

**45.** Zusammensetzung gemäss Anspruch 44, dadurch gekennzeichnet, dass es sich bei dem thermoplastischen Polymer um ein sulfatiertes und/oder sulfonatalkyliertes Polyvinylalkohol-Copolymere handelt.

**46.** Zusammensetzung gemäss Anspruch 45, dadurch gekennzeichnet, dass das Polyvinylalkohol-Copolymer

a) 90 bis 5 Mol% Struktureinheiten der Formel V und/oder Va

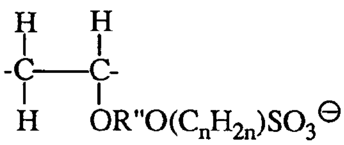 (V),

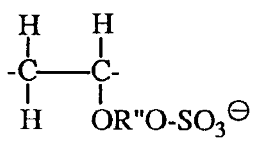 (Va),

und

b) 95 bis 10 Mol% gleiche oder verschiedene Struktureinheiten der Formel VI

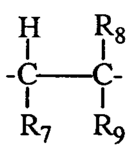 (VI),

enthält, worin $R_7$ für H, $C_1$-$C_6$-Alkyl, -$COOR_{10}$ oder -$COO^{\ominus}$ steht, $R_8$ H, F, Cl, CN oder $C_1$-$C_6$-Alkyl bedeutet, und $R_9$ H, OH, R"OH, F, Cl, CN, $R_{10}$-O-, $C_1$-$C_{12}$-Alkyl, $COO^{\ominus}$, -$COOR_{10}$, -OCO-$R_{10}$, Methylphenyl oder Phenyl darstellt, wobei $R_{10}$ $C_1$-$C_{18}$-Alkyl, $C_5$-$C_7$-Cycloalkyl, ($C_1$ -$C_{12}$-Alkyl)-$C_5$-$C_7$-cycloalkyl, Phenyl, ($C_1$-$C_{12}$-Alkyl)phenyl, Benzyl oder ($C_1$-$C_{12}$-Alkyl)benzyl darstellt und R" für lineares oder verzweigtes $C_2$-$C_{18}$-Alkylen, Poly($C_2$-$C_6$-oxaalkylen) mit 2 bis 6 Oxaalkyleneinheiten steht.

**47.** Zusammensetzung gemäss Anspruch 46, dadurch gekennzeichnet, dass das Copolymer 60 bis 10 Mol% Struktureinheiten der Formel IV, und 40 bis 90 Mol% Strukturelemente der Formel V enthält.

**48.** Zusammensetzung gemäss Anspruch 46, dadurch gekennzeichnet, dass R" als Alkylen 2 bis 12 C-Atome enthält, und R" in der Bedeutung von Poly(oxaalkylen) 2 bis 4 Oxaalkyleneinheiten mit 2 bis 4 C-Atomen im Alkylenrest enthält.

**49.** Zusammensetzung gemäss Anspruch 46, dadurch gekennzeichnet, dass $R_7$ für H, $R_8$ für H, F, Cl, Methyl oder Ethyl, und $R_9$ für H, OH, F, Cl, CN, $C_1$-$C_4$-Alkyl, $C_1$-$C_6$-Alkoxy, -COO-$C_1$-$C_6$-Alkyl, -OOC-$C_1$-$C_6$-Alkyl oder Phenyl stehen.

**50.** Zusammensetzung gemäss Anspruch 49, dadurch gekennzeichnet, dass in Formel VI $R_7$ H bedeutet, $R_8$ H oder Methyl darstellt, und $R_9$ H, OH, CN, Methyl, $OCH_3$ oder -$COOCH_3$ bedeutet.

**51.** Zusammensetzung gemäss Anspruch 46, dadurch gekennzeichnet, dass 20 bis 60 Mol-% Struktureinheiten-

heiten der Formel V, 50 bis 40 Mol-% Struktureinheiten der Formel $-CH_2-CH_2-$ und 0 bis 50 Mol-% Struktureinheiten der Formel $-CH_2-CH(OH)-$ enthalten sind, wobei sich die Mol-% zu 100 Prozent addieren.

**52.** Zusammensetzung gemäss Anspruch 1, dadurch gekennzeichnet, dass das thermoplastische Polymer ein sulfatiertes und/oder sulfonatalkyliertes Polymer eines hydroxylierten Polybutadiens, Chloroprens oder Polyisoprens ist.

**53.** Zusammensetzung gemäss Anspruch 52, dadurch gekennzeichnet, dass das thermoplastische Polymer 5 bis 100 Mol-% Struktureinheiten der Formeln VII und/oder VIIa

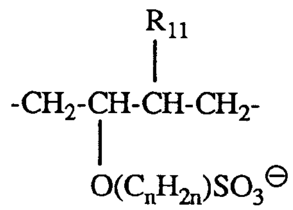

(VII),

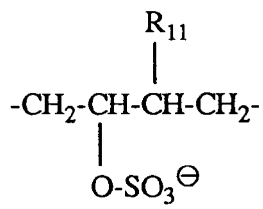

(VIIa),

und 0 bis 95 Mol-% Struktureinheiten der Formeln VIII und/oder VIIIa,

$$-CH_2-CH=CH-CH_2- \quad (VIII),$$

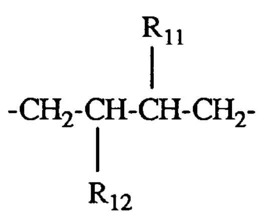

(VIIIa),

enthält, worin $R_{11}$ und $R_{12}$ unabhängig voneinander für H, OH oder Cl stehen und die Gruppe $-C_nH_{2n}-$ die in Anspruch 1 angegebene Bedeutung hat.

**54.** Zusammensetzung gemäss Anspruch 53, dadurch gekennzeichnet, dass 10 bis 100 Mol-% Struktureinheiten der Formeln VII und/oder VIIa und 90 bis 0 Mol-% Struktureinheiten der Formeln VIII und/oder VIIIa enthalten sind.

**55.** Zusammensetzung gemäss Anspruch 54, dadurch gekennzeichnet, dass 20 bis 60 Mol-% Struktureinheiten der Formeln VII und/oder VIIa und 80 bis 40 Mol-% Struktureinheiten der Formeln VIII und/oder VIIIa enthalten sind.

**56.** Zusammensetzung gemäss Anspruch 53, dadurch gekennzeichnet, dass $R_{11}$ Cl oder H und $R_{12}$ H bedeuten.

**57.** Zusammensetzung gemäss Anspruch 1, dadurch gekennzeichnet, dass das filmbildende thermoplastische Polymer

a) 100 bis 50 Mol-% gleiche oder verschiedene Struktureinheiten der Formel II und/oder IIa

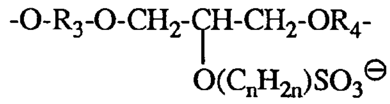

(II),

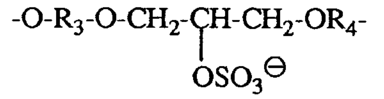

(IIa),

und

b) 0 bis 50 Mol-% gleiche oder verschiedene Struktureinheiten der Formel III

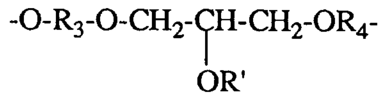

(III),

enthält, bezogen auf das Polyaddukt, wobei $R_3$ und $R_4$ unabhängig voneinander den um zwei Hydroxylgruppen verminderten Rest eines Diols mit aliphatischen oder aromatischen Diolgruppen darstellen, und R' H, $C_1$-$C_{20}$-Alkyl, $C_1$-$C_{20}$-Acyl oder mit einem $C_1$-$C_{20}$-Kohlenwasserstoffrest N-substituiertes Aminocarbonyl bedeutet.

**58.** Zusammensetzung gemäss Anspruch 57, dadurch gekennzeichnet, dass das Polymer 60 bis 100 Mol-% Strukturelemente der Formeln II und/oder IIa und 40 bis 0 Mol-% Strukturelemente der Formel III enthält.

**59.** Zusammensetzung gemäss Anspruch 58, dadurch gekennzeichnet, dass das Polymer 60 bis 90 Mol-% Strukturelemente der Formeln II und/oder IIa und 40 bis 10 Mol-% Strukturelemente der Formel III enthält.

**60.** Zusammensetzung gemäss Anspruch 57, dadurch gekennzeichnet, dass R' H bedeutet.

**61.** Zusammensetzung gemäss Anspruch 57, dadurch gekennzeichnet, dass sie ein Polythiophen in oxidierter, polykationischer Form und wiederkehrenden Struktureinheiten der Formel I

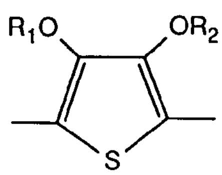

(I),

enthält, worin $R_1$ und $R_2$ unabhängig voneinander für lineares oder verzweigtes $C_1$-$C_6$-Alkyl oder $R_1$ und $R_2$ zusammen Methylen oder den Rest -$CHR_a$-$CHR_b$- darstellen, worin $R_a$ und $R_b$ unabhängig voneinander H, Methyl oder Ethyl bedeuten.

**62.** Zusammensetzung gemäss Anspruch 61, dadurch gekennzeichnet, dass $R_a$ und $R_b$ je H bedeuten.

**63.** Zusammensetzung gemäss Anspruch 57, dadurch gekennzeichnet, dass $R_3$ und $R_4$ unabhängig voneinander einen Rest der Formel IV

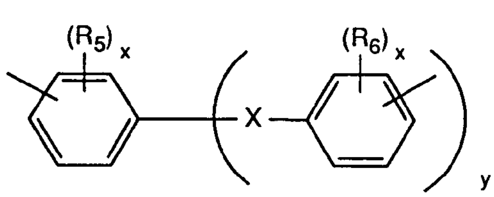

(IV)

darstellen, worin X eine direkte Bindung, $C_1$-$C_4$-Alkylen, $C_2$-$C_{12}$-Alkyliden, $C_5$-$C_8$-Cycloalkyliden, -O-, -S-, -SO-, $-SO_2-$, -CO-, $-CO_2-$, -N($C_1$-$C_4$-Alkyl)- oder $-Si(CH_3)_2-$ bedeutet, $R_5$ und $R_6$ unabhängig voneinander H, Halogen, $C_1$-$C_4$-Alkyl oder $C_1$-$C_4$-Alkoxy sind, und x 1 oder 2 bedeutet und y für 0 oder 1 steht.

**64.** Zusammensetzung gemäss Anspruch 63, dadurch gekennzeichnet, dass X eine direkte Bindung, Methylen, Ethylen, $C_2$-$C_6$-Alkyliden, Cyclohexyliden oder Cyclopentyliden, -O- oder -S- darstellt.

**65.** Zusammensetzung gemäss Anspruch 63, dadurch gekennzeichnet, dass $R_5$ und $R_5$ für H oder Methyl und y für 1 stehen.

**66.** Zusammensetzung gemäss Anspruch 63, dadurch gekennzeichnet, dass $R_3$ und $R_4$ den Rest

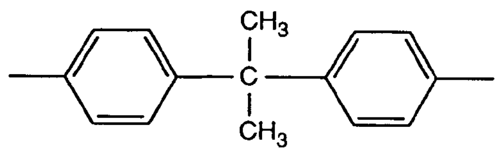

bedeuten.

**67.** Zusammensetzung gemäss Anspruch 61, dadurch gekennzeichnet, dass die Strukturelemente des Polythiophens Resten der Formel

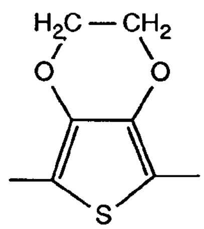

entsprechen.

**68.** Verfahren zur Herstellung einer Zusammensetzung gemäss Anspruch 1, dadurch gekennzeichnet, dass man

a) in einer organischen, wässrig-organischen oder wässrigen Lösung ein Thiophen der Formel I in Gegenwart mindestens eines Salzes von einem filmbildenden thermoplastischen Polymeren mit sulfatierten Alkoholgruppen

$$-\overset{|}{\underset{|}{C}}-O-SO_3^{\ominus}$$

und/oder mit sulfonatalkylierten Alkoholgruppen

$$-\overset{|}{\underset{|}{C}}-O-(C_nH_{2n})-SO_3^{\ominus}$$

in wiederkehrenden Struktureinheiten, worin die Gruppe $-(C_nH_{2n})-$ für lineares oder verzweigtes $C_2$-$C_{12}$-Alkylen mit 2 bis 5 C-Atomen in der Kohlenstoffkette steht, das unsubstituiert oder mit $C_1$-$C_4$-Alkoxy substituiert ist, elektrochemisch polymerisiert und danach die Zusammensetzung von der Anode entfernt oder

b) ein Thiophen der Formel I in Gegenwart besagten Salzes und eines inerten Lösungsmittels mit einem Oxidationsmittel umsetzt.

**69.** Zusammensetzung aus

a) einem thermoplastischen, duroplastischen oder strukturell vernetzten Polymer, dem

b) ein elektrisch leitender feinteiliger Füllstoff aus einer pulverförmigen Zusammensetzung gemäss Anspruch 1 einverleibt ist.

**70.** Zusammensetzung gemäss Anspruch 69, dadurch gekennzeichnet, dass die Menge der Komponente b) 0,1 bis 90 Gew.-% beträgt, bezogen auf die Komponente a).

**71.** Zusammensetzung gemäss Anspruch 70, dadurch gekennzeichnet, dass die Menge der Komponente b) 5 bis 80 Gew.-% beträgt.

**72.** Pressmassen, bestehend aus einer pulverförmigen Zusammensetzung gemäss Anspruch 1.

**73.** Verwendung der Zusammensetzungen gemäss Anspruch 1 zur Herstellung von elektrisch leitenden Formkörpern.

**74.** Verwendung der Zusammensetzungen gemäss Anspruch 69 zur Herstellung von antistatisch ausgerüsteten oder elektrisch leitenden Formteilen.

**75.** Verwendung der Pressmasse gemäss Anspruch 72 zur Herstellung von elektrisch leitenden Formkörpern.